# EUROPÄISCHE PATENTANMELDUNG

(11) **EP 2 581 409 A1**
(43) Veröffentlichungstag der Anmeldung: **17.04.2013**
(21) Anmeldenummer: 11290471.9
(22) Anmeldetag: 11.10.2011
(51) Int. Cl.: C08K 5/36, C08L 9/02

(54) **Vulkanisierbare Zusammensetzungen auf Basis Epoxygruppen-haltiger Nitrilkautschuke**

(71) Anmelder: Lanxess Deutschland GmbH, 51368 Leverkusen (DE)
(72) Erfinder: Brandau, Sven Dr., 67000 Strasbourg (FR); Magg, Hans Dr., 51515 Kürten (DE); Welle, Achim, 51375 Leverkusen (DE)

(57) **Zusammenfassung**

Bereitgestellt werden neue vulkanisierbare Zusammensetzungen auf Basis von Epoxygruppen-haltigen, optional ganz oder teilweise hydrierten Nitrilkautschuken, speziellen basischen Vernetzern sowie von Vernetzungsbeschleunigern, wodurch der Einsatz herkömmlicher Vernetzer wie insbesondere Schwefel nicht mehr erforderlich ist. Die daraus herstellbaren Vulkanisate verfügen über sehr gute Druckverformungsreste bei Raumtemperatur, 100°C und 150°C und zeigen desweiteren eine hohe Zugspannung bei guten Bruchdehnungen.

## Beschreibung

Die Erfindung betrifft vulkanisierbare Zusammensetzungen auf Basis von Epoxygruppen-haltigen, optional ganz oder teilweise hydrierten Nitrilkautschuken und speziellen Vernetzern, ein Verfahren zu deren Herstellung, ein Verfahren zur Herstellung von Vulkanisaten daraus, die so erhaltenen Vulkanisate sowie Epoxygruppen-haltige ganz oder teilweise hydrierte Nitrilkautschuke.

Unter Nitrilkautschuken, abgekürzt oft auch als "NBR" bezeichnet, werden Kautschuke verstanden, bei denen es sich um Co- oder Terpolymere aus mindestens einem α,β-ungesättigten Nitril, mindestens einem konjugierten Dien und gegebenenfalls einem oder mehreren weiteren copolymerisierbaren Monomeren handelt. Unter hydrierten Nitrilkautschuken ("HNBR") werden entsprechende Co- oder Terpolymere verstanden, bei denen die C=C-Doppelbindungen der einpolymerisierten Dieneinheiten ganz oder teilweise hydriert sind.

Sowohl NBR als auch HNBR nehmen seit vielen Jahren einen festen Platz im Bereich der Spezialelastomere ein. Sie verfügen über ein ausgezeichnetes Eigenschaftsprofil in Form einer ausgezeichneten Ölbeständigkeit, einer guten Hitzebeständigkeit, einer hervorragenden Beständigkeit gegen Ozon und Chemikalien, wobei letztere im Fall des HNBR noch ausgeprägter als beim NBR ist. NBR und HNBR weisen ferner sehr gute mechanische sowie anwendungstechnische Eigenschaften auf. Aus diesem Grund finden sie breite Verwendung in den verschiedensten Anwendungsgebieten und werden beispielsweise eingesetzt zur Herstellung von Dichtungen, Schläuchen, Riemen und Dämpfungselementen im Automobilsektor, ferner für Statoren, Bohrlochdichtungen und Ventildichtungen im Bereich der Ölförderung sowie auch für zahlreiche Teile der Elektroindustrie, des Maschinen- und Schiffsbaus. Kommerziell erhältlich sind eine Vielzahl unterschiedlicher Typen, die sich je nach Anwendungsbereich durch unterschiedliche Monomere, Molekulargewichte, Polydispersitäten sowie mechanische und physikalische Eigenschaften auszeichnen. Neben den Standardtypen werden vor allem Spezialtypen, die sich durch Gehalte spezieller Termonomere oder besondere Funktionalisierungen zunehmend nachgefragt.

Im praktischen Einsatz der (H)NBR Kautschuke kommt dabei auch der Vulkanisation der Kautschuke, d.h. insbesondere dem Vernetzersystem und den Vulkanisationsbedingungen, eine wachsende Bedeutung zu. So wurden neben den bereits seit vielen Jahrzehnten existierenden klassischen Kautschuk-Vernetzungssystemen auf Basis von Peroxiden bzw. Schwefel in den letzten Jahren diverse neue Konzepte zur alternativen Vernetzung entwickelt. Derartige Vernetzungskonzepte beziehen auch Polymere mit ein, die aufgrund funktioneller Gruppen nicht allen Vemetzungsformen und -agentien zugänglich sind und daher eine besondere Herausforderung darstellen.

In US-A-4,094,831 wird die Vernetzung von Co- oder Terpolymeren aus konjugierten C₄-C₁₀-konjugierten Dienen, ggf. zusätzlich C₂-C₁₄-Olefinen und einem Epoxygruppen-enthaltenden Monomer durch Einsatz von Mono- und Polyaminen, Mono- und Polyanhydriden sowie Mono- und Polycarbonsäuren beschrieben. Acrylnitril wird zur Herstellung dieser Co- oder Terpolymeren nicht als Monomer eingesetzt.

In Polymer 46(2005)7632-7643 wird die Herstellung von Glycidylmethacrylat gegrafteten Acrylnitril-Butadien-Styrol Copolymeren (ABS-g-GMA) durch Emulsionspolymerisation beschrieben. Aus diesem ABS-g-GMA Polymeren wird anschließend mit Polybutylenterephthalat (PBT) ein Blend hergestellt. Berichtet wird über ein gute Dispergierbarkeit der ABS-g-GMA Teilchen in der PBT Matrix, was auf eine Reaktion zwischen den Carboxyl/Hydroxy-Gruppen der PBT Kettenenden und den Epoxygruppen der GMA Einheiten an der Grenzfläche zurückgeführt wird.

In WO-A-02/46254 werden funktionalisierte Quaterpolymere basierend auf konjugierten Dienen, Vinyl-substituierten aromatischen Verbindungen, olefinisch ungesättigten Nitrilen und Hydroxylgruppen-haltigen oder Epoxygruppen-haltigen Monomeren, darauf basierende Kautschukmischungen sowie deren Verwendung zur Herstellung von Kautschukformkörpern aller Art beschrieben. Die Kautschukmischungen können gemäß Seite 8, Zeile 27 sowie Seite 9, Zeilen 18-19 die übliche Vernetzer enthalten. Auf Seite 9, Zeilen 28 bis 30 werden als Vernetzer beispielsweise elementarer Schwefel und Schwefelspender, wie Polysulfide, z.B. Dithiocarbamate und Thiurampolysulfide, genannt. Allgemein wird ausgeführt, dass zusätzlich zu dem Vernetzer Vulkanisationsbeschleuniger eingesetzt werden können (z.B. Amine, Guanidine, Thioharnstoffe, Thiazole, Thiurame, Dithiocarbamate, Xanthogenate und Sulfonamide (Seite 9, Zeilen 25, 26). Es wird angegeben, dass diese Zusätze in üblichen Mengen eingesetzt werden (Seite 9, Zeile 21). Ob und in welcher Form der Druckverformungsrest entsprechender Formkörper bei hohen Temperaturen und in der Langzeitbelastung durch speziell zusammengesetzte Vernetzungssysteme beeinflusst werden kann, ist der WO-A-2002/46254 nicht zu entnehmen. Gemäß den Beispielen der WO-A-02/46254 wird der Schwefel-Vernetzer in Mengen von 1,5 Gew.-Teilen bezogen auf 100 Gew.Teile aller in der vulkanisierbare Mischung enthaltenen Kautschuke eingesetzt.

JP-A-2005/120143 betrifft Kautschuke, die Wiederholungseinheiten eines ungesättigten Nitrils, mindestens eines Acrylsäureesters, eines Epoxymonomers, mindestens eines nicht-konjuguierten cyclischen Polyens und gegebenenfalls weiterer ungesättigter Monomere, wie z.B. Butadien, enthalten. Für die Vernetzung werden Schwefel, organische Peroxide oder Metallsalze aromatischer oder aliphatischer Carbonsäuren oder deren Anhydriden genannt.

In European Polymer Journal 37 (2001), Seiten 547-557 werden mit Glycidylmethacrylat gepfropfte Nitrilkautschuke beschrieben, die als Verträglichmacher in Polymermischungen eingesetzt werden. Sie werden durch peroxidisch initiierte Pfropfungsreaktion von Glycidylmethacrylat auf den NBR-Kautschuk hergestellt.

In EP-A-0 160 399 werden Quaterpolymere basierend auf einem Cyano-substituierten Alkyl-(meth)acrylat, einem Alkylacrylat, einem vernetzbaren Monomer und einem weiteren ungesättigen Monomer für Anwendungen v.a. im Automotive Bereich beschrieben, wo eine hohe Einsatzemperatur, eine gute Beständigkeit gegenüber Ozon- sowie saurem Benzin oder Gasohol gefordert werden. Als vernetzbares Monomer kann auch ein Epoxygruppen-enthaltendes Monomer eingesetzt werden. Zur Vernetzung werden bei ungesättigten Polymeren Schwefel, Schwefelspender oder Peroxide genannt, bei vorhandenen Epoxidgruppen die Vernetzung dieser durch Polyamine und deren Salze, Ammoniumverbindungen oder in Kombination mit herkömmlichen Vernetzungssystemen.

In Polymer 40 (1999), Seiten 3665-3676 wird beschrieben, ein spezielles Methylmethacrylat/Glycidylmethacrylat/Ethylacrylat-Terpolymer (MGE) einzusetzen, um die Verträglichkeit von Polybutylenterephthalat (PBT) mit Acrylnitril-Butadien-Styrol-Terpolymeren (ABS) in Blends zu erhöhen. Es wird angegeben, dass verbleibende Restmengen an Säuren in dem durch Emulsionspolymerisation hergestellten ABS zu Vernetzungsreaktionen unter Einbeziehung der Epoxyfunktionalitäten von MGE führen können. Beschrieben wird, dass aus Nitril- und Epoxidfunktionen als Folgereaktion Oxazoline gebildet werden können oder aus Nitrilen durch Hydrolyse Carboxygruppen entstehen, die ebenfalls mit Epoxygruppen reagieren können. Es werden Belege dafür präsentiert, dass diese Vernetzungen einen nachteiligen Effekt auf die mechanischen Eigenschaften des ABS und des Blends haben und ferner geschlussfolgert, dass starke Säuren die Bildung eines Gels oder eines vernetzten Netzwerks in der SAN-Matrix verursachen können, sofern das MGE-Terpolymer anwesend ist.

In US 5,334,666 A werden vulkanisierbare Epoxygruppen-enthaltende Elastomerzusammensetzungen beschrieben. Diese Zusammensetzungen umfassen ein Epoxygruppen-enthaltendes Elastomer sowie ein Vernetzersystem enthaltend (1) **eine organische Verbindung**, **die zwei Strukturelemente -C(=X)-NH-C(=Y)- aufweist**, worin X und X unabhängig voneinander Sauerstoff oder Schwefel darstellen, und (2) eine quaternäre Verbindung, die aus **quaternären Ammoniumsalzen und quaternären Phosphoniumsalzen** ausgewählt ist. Bei der organischen Verbindung (1) handelt es sich bevorzugt um eine heterocyclische, aromatische oder aliphatische Verbindung. Dabei umfassen die heterocyclischen Verbindungen bevorzugt Parbaninsäure, Aloxan, Aloxantin, Aloxan-5-oxim, Barbitursäure, 5-Hydroxybarbitursäure, 5-Benzalbarbitursäure, 5-Aminobarbitursäure, 5-Hydroxyiminobarbitursäure, 5,5-Diethylbarbitursäure, 5-Ethyl-5-phenylbarbitursäure, 5-(1-Methylbutyl)-5-(allyl)barbitursäure, 5,5-Diallylbarbitursäure, Isocyanursäure und Pseudoharnsäure, sowie Verbindungen, worin der Sauerstoff in den vorstehend genannten heterocyclischen Verbindungen durch ein Schwefelatom ausgetauscht ist, z.B. 2,4-Dithiobarbitursäure und 2-Thiobarbitursäure. Bevorzugte aromatische Verbindungen sind Pyromelitdiimid, Melittriimid und 1,4,5,8-Naphthaldiimid sowie die entsprechenden Thioimide. Beispiele für aliphatische Verbindungen sind Triuret, 1-Methyltriuret, 1,1-Diethyltriuret und Tetrauret und die entsprechenden Thioharnstoffe. In Beispiel 5 wird ein Epoxygruppen-enthaltendes Butadien/Acrylnitril-Copolymerelastomer mit Hilfe eines Vernetzers vulkanisiert. Als Vernetzer werden gemäß Tabelle 10 der US-A-5,334,666 Mischungen aus Isocyanursäure (1,8 phr) und OTMeABr (Octadecyltrimethylammoniumbromid) (1,6 phr), 5,5-Diethylbarbitursäure (2,5 phr) und OTMeABr (1,6 phr) bzw. aus Isocyanursäure (1,8 phr) und CePyBr (Cetylpyridiniumbromid) (1,4 phr) eingesetzt. Gemäß dem Vergleichsbeispiel wird ausschließlich 1phr Ammoniumbenzoat als Vernetzer eingesetzt.

JP 01-113477 A betrifft einen Klebstoff, der erhalten wird durch Zugabe eines Vernetzers (z.B. Nadic methyl anhydride, d.h. Methyl-5-norbornen-2,3-dicarbonsäureanhydrid) zu einer Basis-Komponente umfassend 100 Gew.-Teile eines Epoxyharzes, 1 bis 40 Gew.-Teile eines Kautschuks, der durch Pfropfen von Epoxygruppen-enthaltenden polymerisierbaren Monomeren (z.B. Glycidylmethacrylat) auf den Kautschuk (z.B. Acrylnitrilbutadien-Copolymer) erhalten wird, und 1 bis 20 Gew.-Teile feiner fester Kautschukpartikel, erhältlich durch Dispergieren eines üblicherweise flüssigen oder gelösten festen Epoxyharzes in einem flüssigen Kautschuk, und anschließende Vulkanisation des Kautschuks. Beschrieben wird der Einsatz herkömmlicher Vernetzer wie Schwefel, Schwefelverbindungen sowie die Möglichkeit Thiurame, Xanthogenate, Thioharnstoffe, Dithiocarbonate als Beschleuniger einzusetzen.

Aus US 2010/0152365 A1 ist ein Carbonsäure-modifizierter Nitril-Copolymer-Latex bekannt, der zur Herstellung von Formkörpern eingesetzt wird und der aufgrund der Abwesenheit von Schwefel und einem Vulkanisationsbeschleuniger keine allergischen Reaktionen auslösen kann und weitere positive Eigenschaften aufweist. Als vernetzbares ungesättigtes Monomer kann der Copolymer-Latex Glycidyl(meth)acrylat enthalten. Als Vernetzer kann ein ionischer Vernetzer eingesetzt werden, der keine allergischen Reaktionen auslöst. In Anspruch 16 in US 2010/0152365 A1 wird Zinkoxid als ionischer Vernetzer genannt. US 2010/0152365 A1 beschreibt jedoch nicht, ob und in welcher Weise durch Auswahl eines geeigneten Vernetzersystems der Druckverformungsrest bei höheren Temperaturen und langen Belastungszeiten verbessert werden kann.

Aus US-A-4,650,834 sind Epoxygruppen-haltige Elastomerzusammensetzungen bekannt, die neben einem Epoxygruppen-enthaltenden Elastomer (1) eine Polycarbonsäure mit mindestens zwei Carboxylgruppen im Molekül, (2) eine quartäre Verbindung, ausgewählt aus der Gruppe bestehend aus quartären Ammoniumsalzen und quartären Phosphoniumsalzen, und (3) ein Verarbeitungshilfsmittel aufweisen. Die Mischung aus den Komponenten (1) und (2) wird als Vernetzer eingesetzt. In Beispiel 5 wird ein Terpolymer basierend auf Butadien, Acrylnitril und Glycidylmethacrylat mit Hilfe eines Vernetzersystems vulkanisiert. Als Vernetzersystem wird Cetyltrimethylammoniumbromid (2phr)/ Tetradecandionsäure (2.2 phr) bzw. Tetrabutylphosphoniumbromid (1.5phr)/Tetradecandionsäure (2.2 phr) eingesetzt.

Die **Aufgabe der vorliegenden Erfindung** bestand in der Bereitstellung eines thermisch stabilen Vernetzungssystems für Epoxidgruppen-haltige Nitrilkautschuke, wodurch in vulkanisierbaren Zusammensetzungen auf Basis solcher Epoxygruppen-haltigen Nitrilkautschuke der Einsatz von peroxidischen oder schwefelhaltigen Vernetzern substanziell verringert oder ganz vermieden werden kann und die Druckverformungsreste bei hohen Temperaturen und insbesondere langen Belastungszeiten weiter verbessert werden.

Das neue Vernetzungsystem soll die Nachteile der bestehenden Vernetzer vermeiden, einfach in die vulkanisierbaren Nitrilkautschukzusammensetzungen einzubringen sein und eine Vernetzungsreaktion unter unkomplizierten Bedingungen ermöglichen, ohne dass dabei Nebenreaktionen wie z.B. Säure-Base Reaktionen mit weiteren Additiven der vulkanisierbaren Zusammensetzung wie z.B. Alterungsschutzmitteln eintreten. Die eingesetzten Vernetzer sollten eine gute Handhabbarkeit aufweisen und gleichermaßen für Epoxidgruppen-haltige Nitrilkautschuke als auch Epoxidgruppen-haltige hydrierte Nitrilkautschuke erfolgreich einsetzbar sein. Die damit vernetzten Epoxidgruppen-haltigen (H)NBR Kautschuke sollen möglichst gute bis sehr gute Werte im Druckverformungstest aufweisen, insbesondere unter hohen Temperaturen und in der Langzeitanwendung, eine gute Kombination von Bruchdehnung und Zugspannung zeigen und damit eine Alternative bzw. Verbesserung zu den herkömmlichen Systemen bieten.

**Die Aufgabe wird gelöst** durch eine vulkanisierbare Zusammensetzung enthaltend
(i) mindestens einen Epoxygruppen-haltigen, optional ganz oder teilweise hydrierten Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen enthält
(ii) mindestens eine Lewis- und/oder Brönstedt-Base als Vernetzer, und
(iii) mindestens einen Vernetzungsbeschleuniger ausgewählt aus der Gruppe bestehend aus Thiuramen, Xanthogenaten, Thioharnstoffen, Dithiocarbamaten und Carbamaten,
wobei die Lewis- und/oder Brönstedt-Base (ii) verschieden sein muss von der definierten Gruppe der Vernetzungsbeschleuniger (iii), ferner in der vulkanisierbaren Zusammensetzung andere Vernetzer als die unter (ii) genannten nur in einer Menge unter 2,5 Gew.-Teilen bezogen auf 100 Gew.-Teile des Epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen bezogen auf 100 Gew.-Teile des Epoxgruppen-haltigen, optional ganz oder teilweise hydrierten Nitrilkautschuks (i) enthalten sind.

Die Maßgabe, dass die Lewis- und/oder Brönstedt-Base (ii) verschieden sein muss von der definierten Gruppe der Vernetzungsbeschleuniger (iii), gilt für alle weiteren Ausführungsformen auch dann, wenn dies nicht jeweils explizit erwähnt ist.

Überraschenderweise können beim erfindungsgemäßen Einsatz der zuvor genannten Vernetzer (ii) in Kombination mit mindestens einem Vernetzungsbeschleuniger (iii) in der vulkanisierbaren Zusammensetzung thermisch stabile Netzwerke aufgebaut werden. Die Vernetzung bzw. Vulkanisation wird durch die Lewis- oder Brönsted-Base(n) und den Vernetzungsbeschleuniger (iii) katalysiert.

Die eingesetzte Menge anderer Vernetzer wie z.B. Schwefel, Schwefelspendern und Peroxiden und anderer Vernetzungsbeschleuniger kann drastisch reduziert werden, bzw. es kann sogar vollkommen darauf verzichet werden.

In einer Ausführungsform enthält die vulkanisierbare Zusammensetzung
- **andere Vernetzungsbeschleuniger als die unter (iii) genannten** nur in einer Menge von unter 2,5 Gew.-Teilen bezogen auf 100 Gew.-Teile des Epoxygruppen-halitgen, optional ganz oder teilweise hydrierten Nitrilkautschuks (i) und gleichzeitig
- **andere Vernetzer als die unter (ii) genannten** maximal bis zu einer Menge von 2,3 Gew.-Teilen, bevorzugt maximal bis zu einer Menge von 2,25 Gew.-Teilen, besonders bevorzugt maximal bis zu einer Menge von 2 Gew.-Teilen, ganz besonders bevorzugt maximal bis zu einer Menge von 1,5 Gew.-Teilen, inbesondere maximal bis zu einer Menge von 1 Gew.-Teil, inbesondere bevorzugt maximal bis zu einer Menge von 0,5 Gew.-Teilen und insbesondere besonders bevorzugt maximal bis zu einer Menge von 0,4 Gew.-Teilen, jeweils auch bezogen auf 100 Gew.-Teile des Epoxygruppen-haltigen, optional ganz oder teilweise hydrierten Nitrilkautschuks (i).

In einer weiteren Ausführungsform enthält die vulkanisierbare Zusammensetzung
- **andere Vernetzer als die unter (ii) genannten** nur in einer Menge von unter 2,5 Gew.-Teilen bezogen auf 100 Gew.-Teile des Epoxygruppen-haltigen, optional ganz oder teilweise hydrierten Nitrilkautschuks (i) und gleichzeitig
- **andere Vernetzungsbeschleuniger als die unter (iii) genannten** maximal bis zu einer Menge von 2,3 Gew.-Teilen" bevorzugt maximal bis zu einer Menge von 2,25 Gew.-Teilen, besonders bevorzugt maximal bis zu einer Menge von 2 Gew.-Teilen, ganz besonders bevorzugt maximal bis zu einer Menge von 1,5 Gew.Teilen, inbesondere maximal bis zu einer Menge von 1 Gew.-Teil, inbesondere bevorzugt maximal bis zu einer Menge von 0,5 Gew.-Teilen und insbesondere besonders bevorzugt maximal bis zu einer Menge von 0,4 Gew.-Teilen, jeweils auch bezogen auf 100 Gew.-Teile des Epoxygruppen-haltigen, optional ganz oder teilweise hydrierten Nitrilkautschuks (i).

In einer weiteren Ausführungsform enthält die vulkanisierbare Zusammensetzung
- **andere Vernetzer als die unter (ii) genannten** nur in einer Menge von bis zu 1 Gew.-Teil bezogen auf 100 Gew.-Teile des Epoxgruppen-haltigen, optional ganz oder teilweise hydrierten Nitrilkautschuks (i) und gleichzeitig
- **andere Vernetzungsbeschleuniger als die unter (iii) genannten** maximal bis zu einer Menge von 2,3 Gew.-Teilen, bevorzugt maximal bis zu einer Menge von 2,25 Gew.-Teilen, besonders bevorzugt maximal bis zu einer Menge von 2 Gew.-Teilen, ganz besonders bevorzugt maximal bis zu einer Menge von 1,5 Gew.-Teilen, inbesondere maximal bis zu einer Menge von 1 Gew.-Teil, inbesondere bevorzugt maximal bis zu einer Menge von 0,5 Gew.-Teilen und insbesondere besonders bevorzugt maximal bis zu einer Menge von 0,4 Gew.-Teilen, jeweils auch bezogen auf 100 Gew.-Teile des Epoxygruppen-haltigen, optional ganz oder teilweise hydrierten Nitrilkautschuks (i).

In einer weiteren Ausführungsform enthält die vulkanisierbare Zusammensetzung, jeweils bezogen auf 100 Gew.-Teile des Epoxygruppen-haltigen, optional ganz oder teilweise hydrierten Nitrilkautschuks (i),
- andere Vernetzer als die unter (ii) genannten maximal bis zu einer Menge von 2,3 Gew.-Teilen und gleichzeitig andere Vernetzungsbeschleuniger als die unter (iii) genannten maximal bis zu einer Menge von 2,3 Gew.-Teilen,
- bevorzugt andere Vernetzer als die unter (ii) genannten maximal bis zu einer Menge von 2,25 Gew.-Teilen und gleichzeitig andere Vernetzungsbeschleuniger als die unter (iii) genannten maximal bis zu einer Menge von 2,25 Gew.-Teilen,
- besonders bevorzugt andere Vernetzer als die unter (ii) genannten maximal bis zu einer Menge von 2 Gew.-Teilen und gleichzeitig andere Vernetzungsbeschleuniger als die unter (iii) genannten maximal bis zu einer Menge von 2 Gew.-Teilen,
- ganz besonders bevorzugt andere Vernetzer als die unter (ii) genannten maximal bis zu einer Menge von 1,5 Gew.-Teilen und gleichzeitig andere Vernetzungsbeschleuniger als die unter (iii) genannten maximal bis zu einer Menge von 1,5 Gew.-Teilen,
- insbesondere andere Vernetzer als die unter (ii) genannten maximal bis zu einer Menge von 1 Gew.-Teil und gleichzeitig andere Vernetzungsbeschleuniger als die unter (iii) genannten maximal bis zu einer Menge von 1 Gew.-Teil,
- insbesondere bevorzugt andere Vernetzer als die unter (ii) genannten maximal bis zu einer Menge von 0,5 Gew.-Teilen und andere Vernetzungsbeschleuniger als die unter (iii) genannten maximal bis zu einer Menge von 0,5 Gew.-Teilen,
- insbesondere besonders bevorzugt andere Vernetzer als die unter (ii) genannten maximal bis zu einer Menge von 0,4 Gew.-Teilen und andere Vernetzungsbeschleuniger als die unter (iii) genannten maximal bis zu einer Menge von 0,4 Gew.-Teilen und
- insbesondere ganz besonders bevorzugt überhaupt keinen anderen Vernetzer als die unter (ii) genannten und überhaupt keinen anderen Vernetzungsbeschleuniger als die unter (iii) genannten aufweist.

In einer weiteren Ausführungsform der vulkanisierbaren Zusammensetzung liegt die Summe aus and**eren Vernetzern als den unter (ii) genannten sowie anderen Vernetzungsbeschleunigern als den unter (iii) genannten** maximal bei einer Menge von 2,5 Gew.-Teilen, bevorzugt maximal bei einer Menge von 2,25 Gew.-Teilen, besonders bevorzugt maximal bei einer Menge von 2 Gew.-Teilen, ganz besonders bevorzugt maximal bei einer Menge von 1,5 Gew.-Teilen, inbesondere maximal bei einer Menge von 1 Gew.-Teil, inbesondere bevorzugt maximal bei einer Menge von 0,5 Gew.-Teilen und insbesondere besonders bevorzugt maximal bei einer Menge von 0,4 Gew.-Teilen, bezogen auf 100 Gew.-Teile des Epoxygruppen-haltigen, optional ganz oder teilweise hydrierten Nitrilkautschuks (i).

Alle vorgenannten, in irgendeiner Form bevorzugten Ausführungsformen bezüglich der entsprechend angegebenen verringerten Maximalgehalte für die Anwesenheit anderer Vernetzer als den unter (ii) genannten und die Anwesenheit anderer Vernetzungsbeschleunigern als den unter (iii) genannten gelten auch für die im Rahmen dieser Anmeldung noch angegebenen bevorzugten Ausführungsformen der vulkanisierbaren Zusammensetzung, die eine chemisch speziellere Definition der Komponenten (i), (ii) und/oder (iii) aufweisen.

Sofern die vulkanisierbare Zusammensetzung noch ein oder mehrere andere Kautschuke als die unter (i) genannten enthält, so beziehen sich alle vorgenannten maximalen Mengenangaben und deren in irgendeiner Form bevorzugten Ausführungsformen für andere Vernetzer als die unter (ii) genannten und andere Vernetzungsbeschleuniger als die unter (iii) genannten auf 100 Gew.-Teile **der Summe** der Epoxygruppen-haltigen, optional ganz oder teilweise hydrierten Nitrilkautschuks (i) **und** aller anderen in der Zusammensetzung enthaltenen Kautschuke enthalten.

Gegenüber vulkanisierbaren Zusammensetzungen, die neben dem Vernetzer (ii) keinen Vernetzungsbeschleuniger (iii) beinhalten, weisen die erfindungsgemäßen vulkanisierbaren Zusammensetzungen den Vorteil auf, zu Vulkanisaten mit verbessertem, also niedrigerem Compression Set zu führen, insbesondere bei höheren Temperaturen und dies in oftmals kürzeren Vernetzungszeiten.

Möglich ist es, dass die vulkanisierbare Zusammensetzung überhaupt keine anderen Vernetzer außer dem/den Vernetzern (ii) und überhaupt keinen weiteren Vernetzungsbeschleuniger als den unter (iii) genannten aufweist. Zudem ist es möglich, auch auf den Einsatz der bekannten Cokatalysatoren zu verzichten, so dass schwermetallfreie Vulkanisate zugänglich sind. In einer Ausführungsform enthält die vulkanisierbare Zusammensetzung keine Cokatalysatoren, insbesondere keine schwermetallhaltigen Cokatalysatoren. In einer weiteren Ausführungsform enthält die erfindungsgemäße vulkanisierbare Zusammensetzung keine anderen Vernetzer außer dem/den Vernetzern (ii) und gleichzeitig auch keinen anderen Vernetzungsbeschleuniger als dem/den in (iii) genannten und ferner keine Cokatalysatoren, insbesondere keine schwermetallhaltigen Cokatalysatoren. Die Vernetzungsdichte kann durch den Anteil der Epoxygruppen im Nitrilkautschuk gesteuert werden und in weiten Bereichen eingestellt werden. Die erhaltenen Vulkanisate zeigen exzellente Werte im Druckverformungsrest bei Temperaturen von Raumtemperatur bis zu Temperaturen von 150°C.

In einer Ausführungsform kann es sich bei dem Nitrilkautschuk auch um einen ganz oder teilweise hydrierten Nitrilkautschuk handeln, bei dem die in den Wiederholungseinheiten des Nitrilkautschuks vorhandenen C=C Doppelbindungen ganz oder teilweise hydriert sind.

### Vernetzer (ii): Lewis- und/oder Brönsted-Base(n)

Als Lewis- oder Brönsted-Basen können beliebige geeignete anorganische oder organische Basen eingesetzt werden, wobei diese aber nicht ausgewählt sein dürfen aus der Liste von Verbindungen, die unter die definierte Gruppe von Vulkanisationsbeschleunigern (iii) fallen. Es hat sich bewährt, Lewis-Basen, die Elektronenpaardonatoren darstellen, oder Brönstedt Basen, die Protonenakzeptoren darstellen und einen pK_{B}-Wert im Bereich von -12 bis +13, bevorzugt im Bereich von -11 bis +12, besonders bevorzugt im Bereich von -10,5 bis +10, ganz besonders bevorzugt im Bereich von -10 bis +9,5 und insbesondere im Bereich von -10 bis +8 aufweisen, einzusetzen.

Bevorzugt enthält die erfindungsgemäße vulkanisierbare Zusammensetzung als Vernetzer (ii) mindestens eine anorganische oder organische Brönsted- und/oder Lewis-Base.

### Lewis Basen:

Als Lewis-Basen können, soweit es sich dabei jeweils um Elektronenpaardonatoren handelt,
(a) Übergangs- oder Halbmetalle, Aluminium, Gallium, Indium, Zinn, Thallium oder Blei in ihrer elementaren Form eingesetzt werden oder
(b) Alkyl- oder Arylverbindungen, Ester, Salze, Komplexverbindungen oder Oxide der Alkali-, Erdalkali-, Übergangs- oder Halbmetalle, von Aluminium, Gallium, Indium, Zinn, Thallium, Blei, Stickstoff, Sauerstoff oder Phosphor,

Bevorzugt werden als Lewis-Basen, soweit es sich dabei jeweils um Elektronenpaardonatoren handelt,
(a) Übergangs- oder Halbmetalle, Aluminium, Indium oder Zinn in elementarer Form eingesetzt oder
(b) Alkyl- oder Arylverbindungen, Ester, Salze, Komplexverbindungen oder Oxide der Alkali-, Erdalkali-, Übergangs- oder Halbmetalle, von Alumnium, Indium, Zinn, Stickstoff, Sauerstoff oder Phosphor

Besonders bevorzugt werden als Lewis-Basen Kronenether, insbesondere 12-Krone-4, Kryptanden, insbesondere [2.2.2]-Kryptand, Ammoniak, Tetraalkylmmoniumsalze, insbesondere Tetraalkyammoniumbromide, Benzyltrialkylammoniumsalze, Tetraalkylphosphoniumsalze, Benzyltrialkylphosphoniumsalze, Triphenylphosphin, Natrium- oder Kaliumcyanid, Natriumiodid, Bipyridin, Phenantrolin, Tetrahydrofuran, Cyclooctadien, Hydrazin oder Diethylether eingesetzt.

### Brönstedt-Basen:

Als Brönstedt-Base(n) werden bevorzugt solche ausgewählt aus der Gruppe bestehend aus Sulfaten, Sulfiten, Sulfiden, Phosphaten, Carbonaten, substituierten oder unsubstituierter Aminen, substituierten oder unsubstituierten, aromatischen oder nicht-aromatischen stickstoffhaltigen organischen Heterocyclen, substituierten oder unsubstituierten Harnstoffderivaten, Guanidinen und deren Derivaten, Hydroxiden von Alkali- oder Erdalkalimetallen, Salzen von anorganischen oder organischen Sulfon-, Carbon-, und Phophonsäuren, deren Mono- oder Diestern und metallorganischen Verbindungen der Alkalimetalle Lithium, Natrium und Kalium eingesetzt.

Bevorzugte **Carbonate** sind Natriumcarbonat, Kaliumcarbonat, Calciumcarbonat und Lithiumcarbonat.

Bevorzugte **substituierte oder unsubstituierte Amine** sind Ammoniak, Triethylamin, Diisopropylamin und Triethanolamin.

Bevorzugte **substituierte oder unsubstituierte, aromatische oder nicht-aromatische stickstofhaltige organische Heterocyclen** sind Pyridin, 1,8-Diazabicyclo[5.4.0]undec-7-en, 1,4-Diazabicyclo[2.2.2]octan, Tetramethylethylendiamin, Pyrrolidin, Pyrazol, Piperidin, Pyrrol und Imidazol.

Bevorzugte **substituierte oder unsubstituierte Harnstoffderivate** sind Harnstoff, Biuret, Dimethylharnstoff und N,N'-Dimethylpropylenharnstoff.

Bevorzugte **Salze von Sulfonsäuren** sind Natriumalkylbenzylsulfonsäuren, insbesondere Natrium-Dodecylbenzylsulfonsäure.

Bevorzugte Salze der **Phosphonsäuren** sind Natrium oder Kaliumsalze der 1-Hydroxyethan-(1,1-diphosphonsäure), Aminotrimethylenphosphonsäure und Ethylendiamintetra(methylenphosphon-säure).

Bevorzugte **Salze der Carbonsäuren** sind Natrium oder Kaliumsalze der Ascorbinsäure, Essigsäure, Propionsäure, Acrylsäure, Fumarsäure, Maleinsäure, Benzoesäure, Abietinsäure und gesättigte und ungesättigte Fettsäuren wie z.B. Stearinsäure und Ölsäure.

Bevorzugte **metallorganische Verbindungen der Elemente Lithium, Natrium und Kalium** sind Natriumethanolat, Natriummethaolat, Butyllithium, Lithiumdiisopropylamid und Kaliumethanolat.

### Komponente (iii): Vernetzungsbeschleuniger

In den vulkanisierbaren Zusammensetzungen dieser Erfindung wird als Komponente (iii) mindestens ein Vernetzungsbeschleuniger ausgewählt aus der Gruppe bestehend aus Thiuramen, Xanthogenaten, Thioharnstoffen, Dithiocarbamaten und Carbamaten eingesetzt.

In einer bevorzugten Ausführungsform enthält die vulkanisierbare Zusammensetzung als Komponente (iii) mindestens einen Vernetzungsbeschleuniger ausgewählt aus der Gruppe bestehend aus Thiuramen, Xanthogenaten, Dithiocarbamaten und Carbamaten.

Sie sind in ihrem Vulkanisationsverhalten oftmals so schnell, dass sie praktischerweise auf Grund ihrer Reaktivität nicht in konventionellen Vernetzungssystemen zum Einsatz kommen.

Als **Thiurame** kommen bevorzugt ein Thiurammonosulfid, Thiuramdisulfid oder Thiurampolysulfide in Frage. Beispiele bevorzugter Thiurame sind Tetramethylthiuramdisulfid (TMTD), Tetramethylthiurammonosulfd (TMTM), Tetraethylthiuramdisulfid (TETD), Dipentamethylenthiuramtetrasulfid (DPTT), Dipentamethylenthiuramhexasulfid (DPTH), Dipentamethylenehiurammonosulfid (DPTM), Dipentamethylenthiuramdisulfid (DPTD), N,N'-Diethyl-N,N'-diphenylthiuramdisulfid (EPTDM) oder Dimethyldiphenylthiuramdisulfid (MPTD).

Als **Xanthogenate** kommen bevorzugt die Alkali- oder Zink-Salze der Xanthogenate sowie die Arylguanidinxanthogenate in Frage. Beispiele bevorzugter Xanthogenate sind Arylguanidiniumxanthogenate, -bisxanthogenate oder -polyxanthogenate, Zinkisopropylxanthogenat (ZIX) oder dessen wasserlösliches Natriumsalz (NaIX).

Als **Thioharnstoffe** kommen bevorzugt Ethylenthioharstoff (ETU), Diphenylthioharnstoff (DPTU), 1,3-di-o-tolylthioharnstoff (DTTU) oder Diethyltioharnstoff (DPTU) in Frage.

Als **Dithiocarbamate** kommen bevorzugt die Metall- und die Ammoniumdithiocarbamate in Frage. Beispiele bevorzugter Dithiocarbamate sind Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZDBC), Zinkpentamethylendithiocarbamat (ZPD), Zink-N-pentamethylendithiocarbamat (Z5MC), Zinklupetidindindithiocarbamat (ZLD), Zinkdialkyldithiophosphat (ZDT), Zink-2-ethylhexanoat (ZEH), Zinkdinonyldithiocarbamat (ZNDNC), Bismuth dimethyl dithiocarbamate (BIDD), Nickeldibutyldithiocarbamat (NDBC), Seleniumdiethyldithiocarbamate (SeEDC), Seleniumdimethyldithiocarbamat (SeDMC), Natriumdiethyldithiocarbamat (SEDC), Telluriumdiethyldithiocarbamat (TeEDC), Telluriumdiethyldithiocarbamate (TeDEC), Natriumdimethyldithiocarbamate(SMDC), Natriumdibutyldithiocarbamat (SBC) oder Natriumcyclohexylethyldithiocarbamat (SHEC).

Als **Carbamat** kommt bevorzugt Hexamethylendiaminocarbamat in Frage.

**Bevorzugt ist** eine vulkanisierbare Zusammensetzung enthaltend
(i) mindestens einen Epoxygruppen-haltigen, optional ganz oder teilweise hydrierten Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen enthält,
(ii) mindestens eine Lewis- und/oder Brönstedt-Base als Vernetzer und
(iii) mindestens einen Vernetzungsbeschleuniger ausgewählt aus der Gruppe bestehend aus Thiuramen, Xanthogenaten, Dithiocarbamaten und Carbamaten,
   wobei die Lewis- und/oder Brönstedt-Base (ii) verschieden sein muss von der definierten Gruppe der Vernetzungsbeschleuniger (iii), ferner in der vulkanisierbaren Zusammensetzung andere Vernetzer als die unter (ii) genannten nur in einer Menge von unter 2,5 Gew.-Teilen bezogen auf 100 Gew.-Teile des Epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen bezogen auf 100 Gew.-Teile des Epoxgruppen-haltigen, optional ganz oder teilweise hydrierten Nitrilkautschuks (i) enthalten sind.

In einer bevorzugten Ausführungsform enthält die erfindungsgemäße vulkanisierbare Zusammensetzung
(i) mindestens einen **Epoxygruppen-haltigen, optional ganz oder teilweise hydrierten Nitrilkautschuk,** der Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenethern, Kryptanden, Tetraalkylammoniumbromiden, insbesondere Tetra-n-butylammoniumbromid, Triphenylphosphin und Bipyridin und/oder eine **Brönstedt-Base** ausgewählt aus der Gruppe bestehend aus Natriumcarbonat, Kaliumcarbonat, Calciumcarbonat, Lithiumcarbonat, Triethylamin, Diisopropylamin, Triethanolamin Pyridin, 1,8-Diazabicyclo[5.4.0]undec-7-en, 1,4-Diazabicyclo[2.2.2]octan, Tetramethylethylendiamin, Pyrrolidin, Pyrazol, Piperidin, Pyrrol, Imidazol, Harnstoff, Biuret, Dimethylharnstoff, N,N'-Dimethylpropylenharnstoff und Natrium-Dodecylbenzylsulfonsäure als Vernetzer,
(iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiurammonosulfid (DPTM), Dipentamethylenthiuramdisulfid (DPTD), Dimethyldiphenylthiuramdisulfid (MPTD), Arylguanidiniumxanthogenate, Zinkisopropylxanthogenat (ZIX), Ethylenthioharstoff (ETU), Diphenylthioharnstoff (DPTU), 1,3-Di-o-tolylthioharnstoff (DTTU), Diethyltioharnstoff (DPTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZDBC), Zinkpentamethylendithiocarbamat (ZPD), Natriumdiethyldithiocarbamat (SEDC), Natriumdimethyldithiocarbamate(SMDC), Natriumdibutyldithiocarbamat (SBC) und Natriumcyclohexylethyldithiocarbamat (SHEC) wobei in der vulkanisierbaren Zusammensetzung andere Vernetzer als die unter (ii) genannten nur in einer Menge von unter 2,5 Gew.-Teilen bezogen auf 100 Gew.-Teile des epoxygruppen-haltigen optional ganz oder teilweise hydrierten Nitrilkautschuks (i) enthalten sind und andere Vernetzungsbeschleuniger als die unter (iii) genannten nur in einer Menge von unter 2,5 Gew.-Teilen bezogen auf 100 Gew.-Teile des Epoxgruppen-haltigen, optional ganz oder teilweise hydrierten Nitrilkautschuks (i) enthalten sind.

Die Menge des Vernetzers (ii) und des Vernetzungsbeschleunigers (iii) kann in Abhängigkeit von der Konzentration der Epoxygruppen im Nitrilkautschuk gewählt werden.

Die vulkanisierbare Zusammensetzung enthält üblicherweise
(i) mindestens einen **Epoxygruppen-haltigen, optional ganz oder teilweise hydrierten Nitrilkautschuk,** der Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen enthält, und
(ii) 0,01 bis 30 Gew.-Teile, bevorzugt 0,05 bis 25 Gew.-Teile, besonders bevorzugt 0,1 bis 15 Gew.-Teile und insbesondere 0,2 bis 10 Gew.-Teile, jeweils auf 100 Gew.Teile des Nitrilkautschuks (i) bezogen, mindestens einer **Lewis- und/oder Brönsted-Base** als Vernetzer,
(iii) 0,01 bis 10 Gew.-Teile, bevorzugt 0,05 bis 7,5 Gew.-Teile, besonders bevorzugt 0,075 bis 5 Gew.-Teile und insbesondere 0,1 bis 3 Gew.-Teile, jeweils auf 100 Gew.Teile des Nitrilkautschuks (i) bezogen, mindestens eines **Vernetzungsbeschleunigers** ausgewählt aus der Gruppe bestehend aus Thiuramen, Xanthogenaten, Thioharnstoffen, Dithiocarbamaten und Carbamaten, bevorzugt ausgewählt aus der Gruppe bestehend aus Thiuramen, Xanthogenaten, Dithiocarbamaten und Carbamaten,
   wobei die Lewis- und/oder Brönstedt-Base (ii) verschieden sein muss von der definierten Gruppe der Vernetzungsbeschleuniger (iii), ferner in der vulkanisierbaren Zusammensetzung andere Vernetzer als die unter (ii) genannten nur in einer Menge von unter 2,5 Gew.-Teilen bezogen auf 100 Gew.-Teile des epoxygruppen-haltigen optional ganz oder teilweise hydrierten Nitrilkautschuks (i) enthalten sind und andere Vernetzungsbeschleuniger als die unter (iii) genannten nur in einer Menge von unter 2,5 Gew.-Teilen bezogen auf 100 Gew.-Teile des Epoxgruppen-haltigen, optional ganz oder teilweise hydrierten Nitrilkautschuks (i) enthalten sind..

Erfindungsgemäß werden die Lewis- und/oder Brönsted-Basen und der Vernetzungsbeschleuniger (iii) dem Epoxygruppen-haltigen, optional ganz oder teilweise hydrierten Nitrilkautschuk nach dessen Herstellung zugesetzt. Es handelt sich damit nicht um Verbindungen, die bei der Herstellung des optional ganz oder teilweise hydrierten Nitrilkautschuks oder bei dessen Compoundierung frei werden oder bereits vorliegen, sondern um separat zudosierte Basen bzw. die definierten Vernetzungsbeschleuniger. Der Zusatz erfolgt zum Nitrilkautschuk nach dessen Herstellung. Hierdurch wird eine Teilvernetzung bzw. Teilvergelung bereits bei der Herstellung des Nitrilkautschuks vermieden.

### Epoxygruppen-haltiger Nitrilkautschuk:

Als Epoxygruppen-haltige, optional ganz oder teilweise hydrierte Nitrilkautschuke (i) können in den erfindungsgemäßen vulkanisierbaren Zusammensetzungen beliebige geeignete, gegebenenfalls ganz oder teilweise hydrierte Nitrilkautschuke eingesetzt werden, die Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen aufweisen und Epoxygruppen-haltig sind.

Die Epoxygruppen können entweder durch nachträgliches Graften oder Pfropfen von Epoxygruppen-haltigen Verbindungen auf den Nitrilkautschuk aufgebracht werden oder aber auf Wiederholungseinheiten eines bei der Herstellung des Nitrilkautschuks zusätzlich eingesetzten Epoxygruppen-haltigen Monomers zurückzuführen sein.

Bevorzugt werden in der erfindungsgemäßen vulkanisierbaren Zusammensetzung solche Epoxygruppen-haltigen, optional ganz oder teilweise hydrierten Nitrilkautschuke eingesetzt, die Wiederholungseinheiten mindestens eines Nitrils, mindestens eines konjugierten Diens, mindestens eines Epoxygruppen-haltigen Monomers und optional eines oder mehrere weiterer copolymerisierbarer Monomere, jedoch keiner nicht-konjugierten cyclischen Polyene, enthalten.

Die Epoxygruppen-haltigen Nitrilkautschuke werden üblicherweise hergestellt, indem man die vorgenannten Monomere zur Herstellung des Epoxygruppen-haltigen Nitrilkautschuks gemeinsam polymerisiert. Es liegt in diesem Fall kein Pfropfkautschuk vor, der mit Epoxygruppen-haltigen Monomeren gepfropft wurde, sondern ein Kautschuk, bei dem das Epoxygruppen-haltige Monomer im Rahmen der Polymerisation in Form von Wiederholungseinheiten in die Polymerhauptkette eingebaut wurde.

Die zur Herstellung der Epoxygruppen-haltigen Nitrilkautschuke eingesetzten Epoxygruppen-haltigen Monomere besitzen bevorzugt die allgemeine Formel (I) 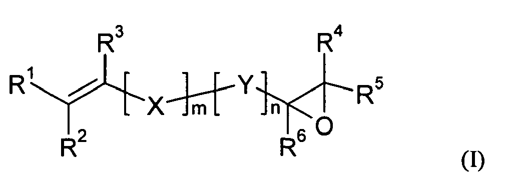 worin,
- **m**: 0 oder 1 ist,
- **X**: für O, O(CR₂)ₚ, (CR₂)ₚO, C(=O)O, C(=O)O(CR₂)ₚ, C(=O)NR, (CR₂)ₚ, N(R), N(R)(CR₂)ₚ, P(R), P(R)(CR₂)ₚ, P(=O)(R), P(=O)(R)(CR₂)ₚ, S, S(CR₂)ₚ, S(=O), S(=O)(CR₂)ₚ, S(=O)₂(CR₂)ₚ oder S(=O)₂ steht, wobei R in diesen Resten gleich oder verschieden ist und die gleiche Bedeutungen besitzen kann wie R¹-R⁶,
- **Y**: für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
- **n und p**: gleich oder verschieden sind und jeweils im Bereich von 0 bis 10.000 liegen,
- **R, R¹, R², R³, R⁴, R⁵ und R⁶**: gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate oder Isocyanide stehen.
Optional sind die für die Reste R, R¹ bis R⁶ und die Wiederholungseinheiten Y der allgemeinen Formel (I) genannten Bedeutungen jeweils ein- oder mehrfach substituiert.

Bevorzugt weisen die folgenden Reste aus den Bedeutungen für R, R¹ bis R⁶ eine derartige ein-oder mehrfache Substitution auf: Alkyl, Carbocyclyl, Heterocyclyl, Aryl, Heteroaryl, Arylalkyl, Heteroarylalkyl, Alkoxy, Aryloxy, Alkylthio, Arylthio, Amino, Amido, Carbamoyl, F, Cl, Br, I, Hydroxy, Phosphonato, Phosphinato, Sulfanyl, Thiocarboxy, Sulfinyl, Sulfono, Sulfino, Sulfeno, Sulfamoyl, Silyl, Silyloxy, Carbonyl, Carboxy, Oxycarbonyl, Oxysulfonyl, Oxo, Thioxo, Borate, Selenate und Epoxy. Als Substituenten kommen - soweit sich chemisch stabile Verbindungen ergeben - alle Bedeutungen in Frage, die R annehmen kann. Besonders geeignet als Substituenten sind Alkyl, Carbocyclyl, Aryl, Halogen, bevorzugt Fluor, Chlor, Brom oder Iod, Nitril (CN) und Carboxy.

**Besonders bevorzugt** wird ein Epoxygruppen-haltiges Monomer der allgemeinen Formel (I) eingesetzt, worin **X, R, R¹** bis **R⁶** und **m** die für die allgemeine Formel (I) genannten Bedeutungen besitzen, und p und n gleich oder verschieden sind und im Bereich von 0 bis 100 liegen.

Insbesondere bevorzugt besitzen **X, R, R¹** bis **R⁶** und **m** die zuvor für die allgemeine Formel (I) genannten Bedeutungen und **p** liegt im Bereich von 0 bis 100 und n ist gleich Null. Dieses Epoxygruppen-haltiges Monomer besitzt somit die **allgemeine Struktur (Ia)** 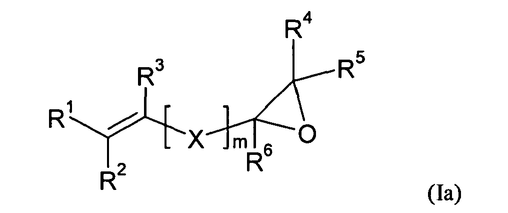 worin
**X, R, R¹ bis R⁶, m und p** die zuvor für die allgemeine Formel (I) genannten Bedeutungen besitzen.

**Inbesondere bevorzugt** wird ein Epoxygruppen-haltiges Monomer der allgemeinen Formel (I) eingesetzt, worin **X, R und R¹ bis R⁶** die zuvor für die allgemeine Formel (I) genannten Bedeutungen besitzen, **m** gleich **1** ist, **p** gleich 1 ist und **n** gleich Null ist.

Bevorzugte Beispiele Epoxygruppen-haltiger Monomere sind 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethylmethacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether, 3-Vinylcyclohexenoxid.

Als Epoxygruppen-haltiges Monomer wird vorzugsweise ein Glycidyl(alkyl)acrylat eingesetzt. Besonders bevorzugt werden Glycidylacrylat oder Glycidylmethacrylat eingesetzt.

In einer bevorzugten Ausführungsform enthält die erfindungsgemäße vulkanisierbare Zusammensetzung
(i) mindestens einen **Epoxygruppen-haltigen, optional ganz oder teiweise hydrierten Nitrilkautschuk,** der Wiederholungseinheiten abgeleitet von mindestens einem konjugierten Dien, mindestens einem α,β-ungesättigten Nitril, mindestens einem Epoxygruppen-haltigen Monomer ausgewählt aus der Gruppe bestehend aus 2-Ethylglycidylacrylat, 2-Ethylglycidylmethacrylat, 2-(n-Propyl) glycidylacrylat, 2-(n-Propyl)glycidylmethacrylat, 2-(n-Butyl)glycidylacrylat, 2-(n-Butyl) glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethyl-methacrylat, (6',7'-Epoxy-heptyl)acrylat, (6',7'-Epoxyheptyl)methacrylat, Allylglycidylether, Allyl-3,4-epoxy-heptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether und 3-Vinylcyclohexenoxid, und gegebenenfalls einem oder mehreren weiteren copolymerisierbaren Monomeren, jedoch keinem nicht-konjugierten cyclischen Polyen, enthält,
(ii) mindestens eine **Lewis-Base** ausgewählt aus der Gruppe bestehend aus Kronenether, Kryptanden, Tetraalkylammoniumbromiden, insbesondere Tetra-n-butylammoniumbromid, Triphenylphosphin und Bipyridin und/oder mindestens einer **Brönstedt-Base** ausgewählt aus der Gruppe bestehend aus Natriumcarbonat, Kaliumcarbonat, Calciumcarbonat, Lithiumcarbonat, Triethylamin, Diisopropylamin, Triethanolamin Pyridin, 1,8-Diazabicyclo[5.4.0]undec-7-en, 1,4-Diazabicyclo[2.2.2]octan, Tetramethylethylendiamin, Pyrrolidin, Pyrazol, Piperidin, Pyrrol, Imidazol, Harnstoff, Biuret, Dimethylharnstoff, N,N'-Dimethylpropylenharnstoff und Natrium-Dodecylbenzylsulfonsäure als Vernetzer, (iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiurammonosulfid (DPTM), Dipentamethylenthiuramdisulfid (DPTD), Dimethyldiphenylthiuramdisulfid (MPTD), Arylguanidiniumxanthogenate, Zinkisopropylxanthogenat (ZIX), Ethylenthioharstoff (ETU), Diphenylthioharnstoff (DPTU), 1,3-di-o-tolylthioharnstoff (DTTU), Diethyltioharnstoff (DPTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZDBC), Zinkpentamethylendithiocarbamat (ZPD), Natriumdiethyldithiocarbamat (SEDC), Natriumdimethyldithiocarbamate(SMDC), Natriumdibutyldithiocarbamat (SBC) und Natriumcyclohexylethyldithiocarbamat (SHEC)
   wobei in der vulkanisierbaren Zusammensetzung andere Vernetzer als die unter (ii) genannten nur in einer Menge von unter 2,5 Gew.-Teilen, bevorzugt nur bis zu 1 Gew. Teil und besonders bevorzugt nur bis zu 0,75 Gew.Teilen, bezogen auf 100 Gew.-Teile des epoxgruppen-haltigen optional ganz oder teilweise hydrierten Nitrilkautschuks (i) enthalten sind und andere Vernetzungsbeschleuniger als die unter (iii) genannten nur in einer Menge von unter 2,5 Gew.-Teilen, bevorzugt nur bis zu 1 Gew. Teil und besonders bevorzugt nur bis zu 0,75 Gew.Teilen, bezogen auf 100 Gew.-Teile des Epoxgruppen-haltigen, optional ganz oder teilweise hydrierten Nitrilkautschuks (i) enthalten sind.

In einer besonders bevorzugten Ausführungsform enthält die erfindungsgemäße vulkanisierbare Zusammensetzung
(i) mindestens einen **Epoxygruppen-haltigen, optional ganz oder teilweise hydrierten Nitrilkautschuk,** der Wiederholungseinheiten abgeleitet von mindestens einem konjugierten Dien, mindestens einem α,β-ungesättigten Nitril, von Glycidylacrylat und/oder Glycidylmethacrylat und gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenether, Cryptanden, Tetraalkylammoniumbromiden, insbesondere Tetra-n-butylammoniumbromid, und Triphenylphosphin oder mindestens eine **Brönstedt-Base** ausgewählt aus der Gruppe bestehend aus Natriumcarbonat, Kaliumcarbonat, Lithiumcarbonat, 1,8-Diazabicyclo[5.4.0]undec-7-en, 1,4-Diazabicyclo[2.2.2]octan, Pyrrolidin, Pyrazol, Imidazol, Harnstoff, Biuret, Dimethylharnstoff, N,N'-Dimethylpropylenharnstoffund Natrium-Dodecylbenzylsulfonsäure als Vernetzer (iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiuramdisulfid (DPTD), Zinkisopropylxanthogenat (ZIX), Ethylenthioharstoff (ETU), 1,3-di-o-tolylthioharnstoff (DTTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkpentamethylendithiocarbamat (ZPD), Natriumdiethyldithiocarbamat (SEDC) und Natriumcyclohexylethyldithiocarbamat (SHEC),
   wobei in der vulkanisierbaren Zusammensetzung andere Vernetzer als die unter (ii) genannten nur in einer Menge von unter 2,5 Gew.-Teilen, bevorzugt nur bis zu 1 Gew. Teil und besonders bevorzugt nur bis zu 0,75 Gew.Teilen, bezogen auf 100 Gew.-Teile des epoxgruppen-haltigen optional ganz oder teilweise hydrierten Nitrilkautschuks (i) enthalten sind und andere Vernetzungsbeschleuniger als die unter (iii) genannten nur in einer Menge von unter 2,5 Gew.-Teilen, bevorzugt nur bis zu 1 Gew. Teil und besonders bevorzugt nur bis zu 0,75 Gew.Teilen, bezogen auf 100 Gew.-Teile des Epoxgruppen-haltigen, optional ganz oder teilweise hydrierten Nitrilkautschuks (i) enthalten sind.

Das **konjugierte Dien** im Epoxygruppen-haltigenNitrilkautschuk kann von jeder Natur sein. Bevorzugt werden (C₄-C₆) konjugierte Diene eingesetzt. Besonders bevorzugt sind 1,2-Butadien, 1,3-Butadien, Isopren, 2,3-Dimethylbutadien, Piperylen oder Gemische daraus. Insbesondere bevorzugt sind 1,3-Butadien und Isopren oder Gemische daraus. Ganz besonders bevorzugt ist 1,3-Butadien.

Als **α,β-ungesättigtes Nitril** kann jedes bekannte α,β-ungesättigte Nitril eingesetzt werden, bevorzugt sind (C₃-C₅)-α,β-ungesättigte Nitrile wie Acrylnitril, Methacrylnitril, Ethacrylnitril oder Mischungen davon. Besonders bevorzugt ist Acrylnitril.

Als weitere copolymerisierbare Monomere können - falls gewünscht - beispielsweise **aromatische Vinylmonomere,** bevorzugt Styrol, α-Methylstyrol und Vinylpyridin, **fluorhaltige Vinylmonomere**, bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere,** bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin eingesetzt werden sowie **nicht-konjugierte Diene,** wie 4-Cyanocyclohexen und 4-Vinylcyclohexen, oder auch **Alkine,** wie 1-oder 2-Butin.

Weiterhin können als copolymerisierbare Termonomere Hydroxylgruppen-haltige Monomere eingesetzt werden, vorzugsweise Hydroxyalkyl(meth)acrylate. Es können aber auch entsprechend substituierte (Meth)acrylamine eingesetzt werden.

Beispiele geeigneter Hydroxyalkylacrylatmonomere sind 2-Hydroxyethyl(meth)acrylat, 2-Hydroxypropyl(meth)acrylat, 3-Hydroxypropyl(meth)acrylat, 3-Chlor-2-hydroxypropyl(meth)-acrylat, 3-Phenoxy-2-hydroxypropyl(meth)acrylat, Glycerinmono(meth)acrylat, Hydroxybutyl-(meth)acrylat, 3-Chlor-2-hydroxypropyl(meth)acrylat, Hydroxyhexyl(meth)acrylat, Hydroxyoctyl-(meth)acrylat, Hydroxymethyl(meth)acrylamid, 2-Hydroxypropyl(meth)acrylat, 3-Hydroxypropyl-(meth)acrylamid, Di-(Ethylenglykol)itaconat, Di-(Propylenglykol)itaconat, Bis(2-Hydroxypropyl)-itaconat, Bis(2-Hydroxyethyl)itaconat, Bis(2-Hydroxyethyl)fumarat, Bis(2-Hydroxyethyl)maleat und Hydroxymethylvinylketon.

Alternativ können als weitere copolymerisierbare Monomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren,** bevorzugt deren Alkylester und Alkoxyalkylester. Bevorzugt sind die Alkylester, insbesondere C₁-C₁₈ Alkylester der α,β-ungesättigten Monocarbonsäuren, Besonders bevorzugt sind Alkylester, insbesondere C₁-C₁₈ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere C₂-C₁₂-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylat and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugtsweise Fluorobenzylacrylat, und Fluorobenzylmethacrylat. Einsetzbar sind auch Fluoroalkylgruppen haltige Acrylate und Methacrylate, vorzugsweise Trifluoroethylacrylat und Tetrafluoropropylmethacrylat. Einsetzbar sind auch Aminogruppenhaltige αβ-ungesättigte Carbonsäureester wie Dimethylaminomethylacrylat und Diethylaminoethylacrylat.

Als weitere copolymerisierbare Monomere können ferner **α,β-ungesättigte Dicarbonsäuren,** bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride,** bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren.**

Bei diesen α,β-ungesättigten Dicarbonsäuremono- oder diestern kann es sich beispielsweise handeln um **Alkyl**-, bevorzugt C₁-C₁₀-Alkyl, insbesondere Ethyl-, n-Propyl-, iso-Propyl, n-Butyl-, tert.-Butyl, n-Pentyl- oder n-Hexyl-, **Alkoxyalkyl-,** bevorzugt C₂-C₁₂ Alkoxyalkyl-, besonders bevorzugt C₃-C₈- Alkoxyalkyl, **Hydroxyalkyl,** bevorzugt C₁-C₁₂ Hydroxyalkyl-, besonders bevorzugt C₂-C₈- Hydroxyalkyl, **Cycloalkyl-,** bevorzugt C₅-C₁₂-Cycloalkyl-, besonders bevorzugt C₆-C₁₂-Cycloalkyl, **Alkylcycloalkyl-,** bevorzugt C₆-C₁₂-Alkylcycloalkyl-, besonders bevorzugt C₇-C₁₀-Alkylcycloalkyl, **Aryl-,** bevorzugt C₆-C₁₄-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen
● Maleinsäuremonoalkylester, bevorzugt Monomethylmaleat, Monoethylmaleat, Monopropyl maleat und Mono-n-butylmaleat;
● Maleinsäuremonocycloalkylester, bevorzugt Monocyclopentylmaleat, Monocyclohexyl maleat und Monocycloheptylmaleat;
● Maleinsäuremonoalkylcycloalkylester, bevorzugt Monomethylcyclopentylmaleat und Monoethylcyclohexylmaleat;
● Maleinsäuremonoarylester, bevorzugt Monophenylmaleat;
● Maleinsäuremonobenzylester, bevorzugt Monobenzylmaleat;
● Fumarsäuremonoalkylester, bevorzugt Monomethylfumarat, Monoethylfumarat, Monopropyl fumarat und Mono-n-butyl fumarat;
● Fumarsäuremonocycloalkylester, bevorzugt Monocyclopentylfumarat, Monocyclohexyl fumarat und Monocycloheptylfumarat;
● Fumarsäuremonoalkylcycloalkylester, bevorzugt Monomethylcyclopentylfumarat und Monoethylcyclohexylfumarat;
● Fumarsäuremonoarylester, bevorzugt Monophenylfumarat;
● Fumarsäuremonobenzylester, bevorzugt Monobenzylfumarat;
● Citraconsäuremonoalkylester, bevorzugt Monomethylcitraconat, Monoethylcitraconat, Monopropylcitraconat und Mono-n-butyl citraconat;
● Citraconsäuremonocycloalkylester, bevorzugt Monocyclopentylcitraconat, Monocyclohexyl citraconat und Monocycloheptylcitraconat;
● Citraconsäuremonoalkylcycloalkylester, bevorzugt Monomethylcyclopentylcitraconat und Monoethylcyclohexylcitraconat;
● Citraconsäuremonoarylester, bevorzugt Monophenylcitraconat;
● Citraconsäuremonobenzylester, bevorzgut Monobenzylcitraconat;
● Itaconsäuremonoalkylester, bevorzugt Monomethylitaconat, Monoethylitaconat, Monopropyl itaconat und Mono-n-butyl itaconat;
● Itaconsäuremonocycloalkylester, bevorzugt Monocyclopentylitaconat, Monocyclohexyl itaconat und Monocycloheptylitaconat;
● Itaconsäuremonoalkylcycloalkylester, bevorzugt Monomethylcyclopentylitaconat und Monoethylcyclohexylitaconat;
● Itaconsäuremonoarylester, bevorzugt Monophenylitaconat;
● Itaconsäuremonobenzylester, bevorzugt Monobenzylitaconat.
● Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als weitere copolymerisierbare Monomere kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder-methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

In einer bevorzugten Ausführungsform enthält die erfindungsgemäße vulkanisierbare Zusammensetzung
(i) mindestens einen **Epoxygruppen-haltigen, optional ganz oder teilweise hydrierten Nitrilkautschuk,** der Wiederholungseinheiten abgeleitet von a) Acrylnitril, b) 1,3-Butadien, c) mindestens einem Epoxygruppen-haltigen Monomer ausgewählt aus der Gruppe bestehend aus 2-Ethylglycidylacrylat, 2-Ethylglycidylmethacrylat, 2-(n-Propyl) glycidylacrylat, 2-(n-Propyl)glycidylmethacrylat, 2-(n-Butyl)glycidylacrylat, 2-(n-Butyl) glycidylmethacrylat, Glycidylmethylacrylat, Glycidylmethyl-methacrylat, Glycidylacrylat, (3',4'-Epoxyheptyl)-2-ethylacrylat, (3',4'-Epoxyheptyl)-2-ethyl-methacrylat, (6',7'-Epoxy-heptyl)acrylat, (6',7'-Epoxyheptyl)methacrylat, Allylglycidylether, Allyl-3,4-epoxy-heptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether und 3-Vinylcyclohexenoxid, und d) gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenether, Cryptanden, Tetraalkylammoniumbromiden, insbesondere Tetra-n-butylammoniumbromid, und Triphenylphosphin und/oder eine **Brönstedt-Base** ausgewählt aus der Gruppe bestehend aus Natriumcarbonat, Kaliumcarbonat, Lithiumcarbonat, 1,8-Diazabicyclo[5.4.0]undec-7-en, 1,4-Diazabicyclo[2.2.2]octan, Pyrrolidin, Pyrazol, Imidazol, Harnstoff, Biuret, Dimethylharnstoff, N,N'-Dimethylpropylenharnstoff oder Natrium-Dodecylbenzylsulfonsäure als Vernetzer und
(iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiuramdisulfid (DPTD), Zinkisopropylxanthogenat (ZIX), Ethylenthioharstoff (ETU), 1,3-Di-o-tolylthioharnstoff (DTTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkpentamethylendithiocarbamat (ZPD), Natriumdiethyldithiocarbamat (SEDC) und Natriumcyclohexylethyldithiocarbamat (SHEC),
   wobei in der vulkanisierbaren Zusammensetzung andere Vernetzer als die unter (ii) genannten nur in einer Menge unter 2,5 Gew.-Teilen, bevorzugt nur bis zu 1 Gew. Teil und besonders bevorzugt nur bis zu 0,75 Gew.Teilen, bezogen auf 100 Gew.-Teile des epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen, bevorzugt nur bis zu 1 Gew.Teil und besonders bevorzugt nur bis zu 0,75 Gew.Teilen, bezogen auf 100 Gew.-Teile des Epoxgruppen-haltigen, optional ganz oder teilweise hydrierten Nitrilkautschuks (i) enthalten sind.

In einer bevorzugten Ausführungsform enthält die erfindungsgemäße vulkanisierbare Zusammensetzung
(i) mindestens einen **Epoxygruppen-haltigen, optional ganz oder teilweise hydrierten Nitrilkautschuk,** der Wiederholungseinheiten abgeleitet von a) Acrylnitril, b) 1,3-Butadien, c) Glycidylacrylat und/oder Glycidylmethacrylat und d) gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenether, Cryptanden, Tetraalkylammoniumbromiden, insbesondere Tetra-n-butylammoniumbromid, und Triphenylphosphin und/oder eine **Brönstedt-Base** ausgewählt aus der Gruppe bestehend aus Natriumcarbonat, Kaliumcarbonat, Lithiumcarbonat, 1,8-Diazabicyclo[5.4.0]undec-7-en, 1,4-Diazabicyclo[2.2.2]octan, Pyrrolidin, Pyrazol, Imidazol, Harnstoff, Biuret, Dimethylharnstoff, N,N'-Dimethylpropylenharnstoff oder Natrium-Dodecylbenzylsulfonsäure als Vernetzer
(iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiuramdisulfid (DPTD), Zinkisopropylxanthogenat (ZIX), Ethylenthioharstoff (ETU), 1,3-Di-o-tolylthioharnstoff (DTTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkpentamethylendithiocarbamat (ZPD), Natriumdiethyldithiocarbamat (SEDC) und Natriumcyclohexylethyldithiocarbamat (SHEC)
   wobei in der vulkanisierbaren Zusammensetzung andere Vernetzer als die unter (ii) genannten nur in einer Menge unter 2,5 Gew.-Teilen %, bevorzugt nur bis zu 1 Gew. Teil und besonders bevorzugt nur bis zu 0,75 Gew.Teilen, bezogen auf 100 Gew.-Teile des epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen, bevorzugt nur bis zu 1 Gew. Teil und besonders bevorzugt nur bis zu 0,75 Gew.Teilen, bezogen auf 100 Gew.-Teile des Epoxgruppen-haltigen, optional ganz oder teilweise hydrierten Nitrilkautschuks (i) enthalten sind.

### Mengenverhältnisse der Monomere:

Die Anteile an den jeweiligen Monomeren in den erfindungsgemäß einzusetzenden epoxygruppenhaltigen, optional ganz oder teilweise hydrierten Nitrilkautschuken können in weiten Bereichen schwanken.

Der Anteil des oder der Summe der konjugierten Diene liegt üblicherweise im Bereich von 39,75 bis 90 Gew.-%, bevorzugt im Bereich von 44 bis 88 Gew.-%, besonders bevorzugt 45,75 bis 87 und insbesondere 47,5 bis 85 Gew.-% bezogen auf den gesamten Nitrilkautschuk.

Der Anteil des oder der Summe der α,β-ungesättigten Nitrile liegt üblicherweise bei 5 bis 60 Gew.-%, bevorzugt bei 10 bis 55 Gew.-%, besonders bevorzugt 13 bis 53 Gew.-% und insbesondere 15 bis 51 Gew.-% bezogen auf gesamten Nitrilkautschuk.

Der Anteil an Epoxygruppen-haltigen Monomeren beträgt vorzugsweise 0,25 bis 35 Gew.-%, besonders bevorzugt 1 bis 30 Gew.-%, besonders bevorzugt 1,25 bis 25 Gew.-% und insbesondere 1,5 bis 18 Gew.-% bezogen auf gesamten Nitrilkautschuk.

Die Anteile aller Monomere müssen sich jeweils zu 100 Gew.-% aufsummieren.

Die Menge an Epoxygruppen-haltigem Monomer im Nitrilkautschuk (i), die Menge des Vernetzers (ii) und des Vernetzungsbeschleunigers (iii) und das Mengenverhältnis von Epoxygruppen zu Vernetzer (ii) und Vernetzungsbeschleunigers (iii) wird je nach gewünschtem Vernetzungsgrad eingestellt. Durch Einstellung des Verhältnisses von Epoxygruppen zur Menge des Vernetzers (ii) und Vernetzungsbeschleuniger (iii) können die Bruchdehnung und Zugspannung den jeweiligen Erfordernissen entsprechend eingestellt werden.

Die optionalen weiteren copolymerisierbaren Monomere können je nach Art in Mengen von 0 bis 50 Gew.%, bezogen auf den gesamten Nitrilkautschuk (i) vorliegen. In diesem Fall werden entsprechende Anteile des oder der konjugierten Diene und/oder des oder der α,β-ungesättigten Nitrile und/oder des Epoxygruppen-haltigen Monomers durch die Anteile der zusätzlichen Monomere ersetzt, wobei sich die Anteile aller Monomere erneut jeweils zu 100 Gew.-% aufsummieren müssen.

Die Herstellung derartiger Epoxygruppen-haltiger, optional ganz oder teilweise hydrierter Nitrilkautschuke ist dem Fachmann hinlänglich bekannt. Der Epoxygruppen-haltige Nitrilkautschuk wird üblicherweise über eine sogenannte Emulsionspolymerisation hergestellt. Diese wird in Gegenwart von Emulgatoren durchgeführt, bei denen es sich typischerweise um wasserlösliche Salze anionischer Emulgatoren oder auch neutrale Emulgatoren handelt. Ferner wird häufig in Gegenwart sogenannter Molekulargewichtsregler polymerisiert, bei denen sich in der Regel um Alkylthiole handelt, die 12-16 Kohlenstoffatome enthalten, bevorzugt um tert.Dodecylmercaptane (t-DDM). Solche Alkylthiole bzw. (Isomeren)-Mischungen von Alkylthiolen sind entweder käuflich erhältlich oder aber nach Verfahren, die in der Literatur hinlänglich beschrieben sind, für den Fachmann herstellbar.

Zur Durchführung der Polymerisation werden sämtliche oder einzelne Komponenten des Initiatorsystems zu Beginn der Polymerisation und/oder während der Polymerisation zudosiert. Die portionsweise Zugabe sämtlicher sowie einzelner Komponenten während der Polymerisation ist bevorzugt. Durch eine sequentielle Zugabe lässt sich die Reaktionsgeschwindigkeit steuern. Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich. Will man chemisch einheitliche Produkte herstellen, so werden die Monomere dosiert. Insbesondere Acrylnitril und Butadien werden nachdosiert, wenn die Zusammensetzung außerhalb des azeotropen Butadien/Acrylnitril-Verhältnisses liegt. Vorzugsweise erfolgt eine Nachdosierung bei NBR-Typen mit Acrylnitrilgehalten von 10 bis 34 Gew.% sowie bei den Typen mit 40 bis 50 Gew.% Acrylnitril (W. Hofmann, Rubber Chem. Technol. 36 (1963). Die Polymerisationszeit liegt im Bereich von 5 h bis 15 h und hängt v.a. vom Acrylnitrilgehalt der Monomermischung und von der Polymerisationstemperatur ab. Letztere liegt im Bereich von 0 bis 30°C, bevorzugt im Bereich von 5 bis 25°C. Bei Erreichung von Umsätzen im Bereich von 50 bis 90%, vorzugsweise im Bereich von 60 bis 85% wird die Polymerisation typischerweise durch Zusatz eines geläufigen Stoppers beendet. Die bei der Emulsionspolymerisation verwendete Wassermenge liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung. Die Polymerisation kann entweder diskontinuierlich oder auch kontinuierlich in einer Rührkesselkaskade durchgeführt werden. Zur Entfernung nicht umgesetzter Monomere sowie flüchtiger Bestandteile wird der abgestoppte Latex einer Wasserdampfdestillation unterzogen. Hierbei werden Temperaturen im Bereich von 70°C bis 150°C angewandt, wobei bei Temperaturen <100°C der Druck reduziert wird. Vor der Entfernung der flüchtigen Bestandteile kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

### Metathese und Hydrierung:

Es ist auch möglich, dass sich an die Herstellung des Epoxygruppen-haltigen Nitrilkautschuks (a) eine Metathese-Reaktion zur Reduktion des Molekulargewichts des Nitrilkautschuks oder (b) eine Metathese-Reaktion und eine nachfolgende Hydrierung oder (c) nur eine Hydrierung anschließt. Diese Metathese- bzw. Hydrierungsreaktionen sind bei dem Fachmann hinlänglich bekannt und in der Literatur beschrieben. Die Metathese ist beispielsweise aus WO-A-02/100941 sowie der WO-A-02/100905 bekannt und kann zum Molekulargewichtsabbau eingesetzt werden.

Die Hydrierung kann unter Einsatz homogener oder heterogener Hydrierkatalysatoren durchgeführt werden. Die eingesetzten Katalysatoren basieren üblicherweise auf Rhodium, Ruthenium oder Titan, es können aber auch Platin, Iridium, Palladium, Rhenium, Ruthenium, Osmium, Kobalt oder Kupfer entweder als Metall, oder aber bevorzugt in Form von Metallverbindungen eingesetzt werden (siehe z.B.US-A-3,700,637**,** DE-A-25 39 132**,** EP-A- 0 134 023**,** DE-OS- 35 41 689**,** DE-OS- 35 40 918**,** EP-A-0 298 386**,** DE-OS- 35 29 252**,** DE-OS- 34 33 392**,** US-A-4,464,515 **und** US-A-4,503,196**).**

Geeignete Katalysatoren und Lösungsmittel für eine Hydrierung in homogener Phase werden im Folgenden beschrieben und sind auch aus DE-A-25 39 132 und der EP-A-0 471 250 bekannt. Die selektive Hydrierung kann beispielsweise in Gegenwart eines Rhodium- oder Ruthenium-haltigen Katalysators erreicht werden. Einsetzbar ist beispielsweise ein Katalysator der allgemeinen Formel

(R¹ₘB)₁ M Xₙ,

worin M Ruthenium oder Rhodium ist, R¹ gleich oder verschieden sind und eine C₁-C₈ Alkylgruppe, eine C₄-C₈ Cycloalkylgruppe, eine C₆-C₁₅ Aryl-Gruppe oder eine C₇-C₁₅ Aralkylgruppe darstellen. B ist Phosphor, Arsen, Schwefel oder eine Sulfoxid-Gruppe S=O, X ist Wasserstoff oder ein Anion, vorzugsweise Halogen und besonders bevorzugt Chlor oder Brom, 1 ist 2,3 oder 4, m ist 2 oder 3 und n ist 1,2 oder 3, bevorzugt 1 oder 3. Bevorzugte Katalysatoren sind Tris(triphenylphosphin)-rhodium(I)-chlorid, Tris(triphenylphosphin)-rhodium(III)-chlorid und Tris(dimethylsulfoxid)-rhodium(III)-chlorid sowie Tetrakis(triphenylphosphin)-rhodium-hydrid der Formel (C₆H₅)₃P)₄RhH und die entsprechenden Verbindungen, in denen das Triphenylphosphin ganz oder teilweise durch Tricyclohexylphosphin ersetzt wurde. Der Katalysator kann in kleinen Mengen benutzt werden. Eine Menge im Bereich von 0,01-1 Gew.%, bevorzugt im Bereich von 0,03-0,5 Gew.% und besonders bevorzugt im Bereich von 0,1-0,3 Gew.% bezogen auf das Gewicht des Polymers sind geeignet.

Üblicherweise ist es sinnvoll, den Katalysator zusammen mit einem Co-Katalysator zu verwenden, der ein Ligand der Formel R¹ₘB ist, wobei R¹, m und B die zuvor für den Katalysator genannten Bedeutungen besitzen. Bevorzugt ist m gleich 3, B gleich Phosphor und die Reste R¹ können gleich oder verschieden sein. Bevorzugt handelt es sich um Co-Katalysatoren mit Trialkyl, Tricycloalkyl, Triaryl, Triaralkyl, Diaryl-monoalkyl, Diaryl-monocycloalkyl, Dialkyl-monoaryl, Dialkylmonocycloalkyl, Dicycloalkyl-monoaryl oder Dicyclalkyl-monoaryl-Resten.

Beispiele von Co-Katalysatoren finden sich beispielsweise in US-A-4,631,315. Bevorzugter Co-Katalysator ist Triphenylphosphin. Der Co-Katalysator wird bevorzugt in Mengen in einem Bereich von 0,3-5 Gew.%, bevorzugt im Bereich von 0,5-4 Gew.% eingesetzt, bezogen auf das Gewicht des zu hydrierenden Nitrilkautschuks. Bevorzugt liegt ferner das Gewichtsverhältnis des Rhodium-haltigen Katalysators zum Co-Katalysator im Bereich von 1:3 bis 1:55, besonders bevorzugt im Bereich von 1:5 bis 1:45, bezogen auf 100 Gewichtsteile des zu hydrierenden Nitrilkautschuks werden vorzugsweise 0,1 bis 33 Gewichtsteile des Co-Katalyators, bevorzugt 0,5 bis 20 und ganz besonders bevorzugt 1 bis 5 Gewichtsteile, insbesondere mehr als 2 aber weniger als 5 Gewichtsteile Co-Katalysator bezogen auf 100 Gewichtsteile des zu hydrierenden Nitrilkautschuks eingesetzt.

Die praktische Durchführung der Hydrierung ist dem Fachmann aus US-A-6,683,136 bekannt. Sie erfolgt üblicherweise, indem man den zu hydrierenden Nitrilkautschuk in einem Lösungsmittel wie Toluol oder Monochlorbenzol bei einer Temperatur im Bereich von 100 bis 150 °C und einem Druck im Bereich von 50 bis 150 bar für 2 bis 10 h mit Wasserstoff beaufschlagt.

Unter Hydrierung wird im Rahmen dieser Erfindung eine Umsetzung der im Ausgangs-Nitrilkautschuk vorhandenen Doppelbindungen zu mindestens 50 %, bevorzugt 70-100%, besonders bevorzugt 80-100%, verstanden. Die Bestimmung des Hydriergrads ist dem Fachmann wohl bekannt und kann beispielsweise durch Raman- oder IR-Spektroskopie erfolgen (siehe z.B. EPA-0 897 933 für die Bestimmung durch Raman-Spektroskopie oder US-A-6,522,408 für die Bestimmung über IR-Spektroskopie).

Bei Einsatz heterogener Katalysatoren handelt es sich üblicherweise um geträgerte Katalysatoren auf der Basis von Palladium, die z. B. auf Kohle, Kieselsäure, Calciumcarbonat oder Bariumsulfat geträgert sind.

Erhalten werden hierbei epoxygruppen-haltige ganz oder teilweise hydrierte Nitrilkautschuke . Diese weisen Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen auf.

Diese Epoxygruppen-haltigen, optional ganz oder teilweise hydrierten Nitrilkautschuke besitzen üblicherweise **Mooney-Viskositäten** (ML (1+4 @100°C)) im Bereich von 10 bis 160, bevorzugt von 15 bis 150 Mooney-Einheiten, besonders bevorzugt von 20 bis 150 Mooney-Einheiten und insbesondere 25 bis 145 Mooney-Einheiten auf. Die Bestimmung der Werte für die Mooney-Viskosität (ML 1+4 @100°C) erfolgt mittels eines Scherscheibenviskosimeters nach DIN 53523/3 bzw. ASTM D 1646 bei 100°C.

Die Epoxygruppen-haltigen, optional ganz oder teilweise hydrierten Nitrilkautschuke besitzen typischerweise ferner eine **Polydispersität** PDI = M_{w}/Mₙ, wobei M_{w} das Gewichtsmittel und Mₙ das Zahlenmittel des Molekulargewichts darstellt, im Bereich von 1,0 bis 6,0 und bevorzugt im Bereich von 1,5 bis 5,0.

Die Glastemperaturen der Epoxygruppen-haltigen, optional ganz oder teilweise hydrierten Nitrilkautschuke liegen im Bereich von -80°C bis +20°C, vorzugsweise im Bereich von -70°C bis +10° und besonders bevorzugt im Bereich von -60°C bis 0°C.

In einer bevorzugten erfindungsgemäßen Ausführungsform handelt es sich um vulkanisierbare Zusammensetzungen, die (iv) zusätzlich mindestens einen Füllstoff enthalten. Bei diesem Füllstoff handelt es sich ausschließlich um Verbindungen, die nicht bereits von den erfindungsgemäßen Vernetzern (ii) oder Vernetzungsbeschleunigern (iii) umfasst werden. Eingesetzt werden können z.B. Ruß, Kieselsäure, Kohlenstoff Nanotubes, Teflon (letzteres bevorzugt in Pulverform) oder Silikate.

In weiteren Ausführungsformen können die erfindungsgemäßen vulkanisierbare Zusammensetzungen auch noch ein oder mehrere dem Kautschukfachmann geläufige Additive enthalten. Auch bei diesen handelt es sich ausschließlich um Verbindungen, die nicht unter die Definition der erfindungsgemäßen Vernetzer (ii) oder Vernetzungsbeschleunigern (iii) fallen. Diese Additive umfassen Füllstoffaktivatoren, Alterungsschutzmittel, Reversionsschutzmittel, Lichtschutzmittel, Ozonschutzmittel, Verarbeitungshilfsmittel, Weichmacher, Mineralöle, Tackifier, Treibmittel, Farbstoffe, Pigmente, Wachse, Harze, Streckmittel, Vulkanisationsverzögerer, sowie weitere oder anderen Additive, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als **Füllstoffaktivatoren** kommen z.B. organische Silane, bevorzugt Vinyltrimethyloxysilan, Vinyldimethoxymethylsilan, Vinyltriethoxysilan, Vinyltris(2-methoxy-ethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyl-dimethoxysilan in Betracht. Weitere Füllstoffaktivatoren stellen zum Beispiel grenzflächenaktive Substanzen wie Triethanolamin, Trimethylolpropan, Hexantriol und Polyethylenglycole mit Molekulargewichten von 74 bis 10 000 g/mol dar. Die Menge an Füllstoffaktivatoren beträgt üblicherweise 0 bis 10 Gew.Teile, bezogen auf 100 Gew.Teile des Epoxidgruppen-haltigen, optional ganz oder teilweise hydrierten Nitrilkautschuks.

Als **Alterungsschutzmittel** können den vulkanisierbaren Zusammensetzungen alle dem Fachmann bekannten zugesetzt werden, die üblicherweise in Mengen von 0 bis 5 Gew.-Teile, bevorzugt 0,5 bis 3 Gew.-Teile, bezogen auf 100 Gew.-Teile des Epoxidgruppen-haltigen, optional hydrierten Nitrilkautschuks eingesetzt werden.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide) in Betracht. Weiterhin können auf die Formoberfläche applizierbare Produkte, wie z.B. Produkte auf Basis von niedermolekularen Silikonverbindungen, Produkte auf Basis von Fluorpolymeren sowie Produkte auf Basis von Phenolharzen eingesetzt werden. Die Formtrennmittel werden in Mengen von 0 bis 10 Gew.-Teile, bevorzugt 0,5 bis 5 Gew.-Teile, bezogen auf 100 Gew.-Teile des Epoxidgruppen-haltigen, optional hydrierten Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

**Gegenstand der Erfindung** ist ferner das Verfahren zur Herstellung der vulkanisierbaren Zusammensetzungen durch Mischen mindestens eines Epoxygruppen-haltigen, ganz oder teilweise hydrierten Nitrilkautschuks (i) mit mindestens einer Lewis- und/oder Brönsted-Säure (ii) und mindestens einem Vernetzungsbeschleuniger (iii). Dieser Mischvorgang kann in allen dem Fachmann geläufigen Mischapparaturen erfolgen. Üblicherweise wird der mindestens eine Vernetzer (ii) und der mindestens eine Vernetzungsbeschleuniger (iii) zum Nitrilkautschuk (i) zudosiert. Sofern ein oder mehrere Füllstoffe sowie ein oder mehrere weitere Kautschukadditive verwendet werden, können auch diese in beliebiger Reihenfolge eingemischt werden.

**Gegenstand der Erfindung** ist weiterhin ein **Verfahren zur Herstellung von Vulkanisaten** auf Basis eines Epoxygruppen-haltigen, optional ganz oder teilweise hydrierten Nitrilkautschuks, dadurch gekennzeichnet, dass die zuvor genannte vulkanisierbare Zusammensetzung unter Erhöhung der Temperatur vernetzt wird. Die Vernetzung kann bei Temperaturen im Bereich von vorzugsweise 20 bis 250°C, besonders bevorzugt 50 bis 230°C erfolgen. Die Dauer der Vernetzungsreaktion liegt im Bereich von einer (1) Minute bis mehrere Tage.

**Gegenstand der Erfindung** sind auch die so erhältlichen Vulkanisate. Diese Vulkanisate enthalten vernetzte Epoxygruppen-haltige, optional ganz oder teilweise hydrierte Nitrilkautschuke. Sie zeigen sehr gute Werte im Druckverformungstest bei Raumtemperatur, 100°C und 150°C und des weiteren eine hohe Zugspannung bei guten Bruchdehnungen.

## Patentansprüche

1. Vulkanisierbare Zusammensetzung enthaltend
(i) mindestens einen Epoxygruppen-haltigen, optional ganz oder teilweise hydrierten Nitrilkautschuk, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen enthält
(ii) mindestens eine Lewis- und/oder Brönstedt-Base als Vernetzer,
(iii) mindestens einen Vernetzungsbeschleuniger ausgewählt aus der Gruppe bestehend aus Thiuramen, Xanthogenaten, Thioharnstoffen, Dithiocarbamaten und Carbamaten,
wobei die Lewis- und/oder Brönstedt-Base (ii) verschieden sein muss von der definierten Gruppe der Vernetzungsbeschleuniger (iii), ferner in der vulkanisierbaren Zusammensetzung andere Vernetzer als die unter (ii) genannten nur in einer Menge von unter 2,5 Gew.-Teilen bezogen auf 100 Gew.-Teile des Epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen bezogen auf 100 Gew.Teile des Eopoxygruppen-haltigen, optional ganz oder teilweise hydrierten Nitrilkautschuks (i) enthalten sind..

2. Vulkanisierbare Zusammensetzung nach Anspruch 1, **dadurch gekennzeichnet, dass** sie jeweils bezogen auf 100 Gew.-Teile des Eopxygruppen-haltigen, optional ganz oder teilweise hydrierten Nitrilkautschuks (i)
- andere Vernetzer als die unter (ii) genannten maximal bis zu einer Menge von 2,3 Gew.-Teilen, und gleichzeitig andere Vernetzungsbeschleuniger als die unter (iii) genannten maximal bis zu einer Menge von 2,3 Gew.-Teilen enthalten,
- bevorzugt andere Vernetzuer als die unter (ii) genannten maximal bis zu einer Menge von 2,25 Gew.-Teilen, undn gleichzeitig andere Vernetzungsbescheluniger als die unter (iii) genannten maximal bis zu einer Menge von 2,25 Gew.-Teilen,
- besonders bevorzugt andere Vernetzer als die unter (ii) genannten maximal bis zu einer Menge von 2 Gew.-Teilen und gleichzeitig andere Vernetzungsbeschleuniger als die unter (iii) genannten maximal bis zu einer Menge von 2 Gew.-Teilen,
- ganz besonders bevorzugt andere Vernetzer als die unter (ii) genannten maximal bis zu einer Menge von 1,5 Gew.-Teilen, und gleichzeitig andere Vernetzungsbeschleuniger als die unter (iii) genannten maximal bis zu einer Menge von 1,5 Gew.-Teilen,
- insbesondere andere Vernetzer als die unter (ii) genannten maximal bis zu einer Menge von 1 Gew.-Teil und gleichzeitig andere Vernetzungsbeschleuniger als die unter (iii) genannten maximal bis zu einer Menge von 1 Gew.-Teil,
- Insbesondere bevorzugt andere Vernetzer als die unter (ii) genannten maximal bis zu einer Menge von 0,5 Gew.-Teilen und andere Vernetzungsbeschleuniger als die unter (iii) genannten maximal bis zu einer Menge von 0,5 Gew.-Teilen,
- insbesondere besonders bevorzugt andere Vernetzer als die unter (ii) genannten maximal bis zu einer Menge von 0,4 Gew.-Teilen, . und andere Vernetzungsbeschleuniger als die unter (iii) genannten maximal bis zu einer Menge von 0,4 Gew.-Teilen und
- insbesondere ganz besonders bevorzugt überhaupt keinen anderen Vernetzer als die unter (ii) genannten und überhaupt keinen anderen Vernetzungsbeschleuniger als die unter (iii) genannten enthalten.

3. Vulkanisierbare Zusammensetzung nach Anspruch 1 oder 2, **dadurch gekennzeichnet, dass** als Lewis-Base(n) Kronenether, insbesondere 12-Krone-4, Kryptanden, insbesondere [2.2.2]-Kryptand, Ammoniak, Tetraalkylammoniumsalze, insbesondere Tetraalkylammoniumbromide, Benzyltrialkylammoniumsalze, Tetraalkylphosphoniumsalze, Benzyltrialkylphosphoniumsalze, Triphenylphosphin, Natrium- oder Kaliumcyanid, Natriumiodid, Bipyridin, Phenantrolin, Tetrahydrofuran, Cyclooctadien, Hydrazin oder Diethylether eingesetzt werden.

4. Vulkanisierbare Zusammensetzung nach einem der Ansprüche 1 bis 3, **dadurch gekennzeichnet, dass** als Brönstedt-Base(n) solche ausgewählt aus der Gruppe bestehend aus Sulfaten, Sulfiten, Sulfiden, Phosphaten, Carbonaten, substituierten oder unsubstituierter Aminen, substituierten oder unsubstituierten, aromatischen oder nicht-aromatischen stickstoffhaltigen organischen Heterocyclen, substituierten oder unsubstituierten Harnstoffderivaten, Guanidinen und deren Derivaten, Hydroxiden von Alkali- oder Erdalkalimetallen, Salzen von anorganischen oder organischen Sulfon-, Carbon-, und Phophonsäuren, deren Mono-oder Diestern und metallorganischen Verbindungen der Alkalimetalle Lithium, Natrium und Kalium eingesetzt werden.

5. Vulkanisierbare Zusammensetzung nach Anspruch 1 enthaltend
(i) mindestens einen **Epoxygruppen-haltigen, optional ganz oder teilweise hydrierten Nitrilkautschuk**, der Wiederholungseinheiten abgeleitet von mindestens einem konjugierten Dien, mindestens einem α,β-ungesättigten Nitril und gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenethern, Kryptanden, Tetraalkylammoniumbromiden, insbesondere Tetra-n-butylammoniumbromid, Triphenylphosphin und Bipyridin und/oder eine **Brönstedt-Base** ausgewählt aus der Gruppe bestehend aus Natriumcarbonat, Kaliumcarbonat, Calciumcarbonat, Lithiumcarbonat, Triethylamin, Diisopropylamin, Triethanolamin, Pyridin, 1,8-Diazabicyclo[5.4.0]undec-7-en, 1,4-Diazabicyclo[2.2.2]octan, Tetramethylethylendiamin, Pyrrolidin, Pyrazol, Piperidin, Pyrrol, Imidazol, Harnstoff, Biuret, Dimethylharnstoff, N,N'-Dimethylpropylenharnstoff und Natrium-Dodecylbenzylsulfonsäure als Vernetzer,
(iii) mindestens einen **Vernetzungsbeschleuniger** ausgewählt aus der Gruppe bestehend aus Hexamethylendiaminocarbamat, Tetramethylthiuramdisulfid (TMTD), Tetramethyl-thiurammonosulfid (TMTM), Tetraethylthiuramdisulfid (TETD), Dipentamethylen-thiurammonosulfid (DPTM), Dipentamethylenthiuramdisulfid (DPTD), Dimethyl-diphenyl-thiuramdisulfid (MPTD), Arylguanidiniumxanthogenate, Zinkisopropylxanthogenat (ZIX), Ethylenthioharstoff (ETU), Diphenylthioharnstoff (DPTU), 1,3-Di-o-tolylthioharnstoff (DTTU), Diethyltioharnstoff (DPTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZDBC), Zinkpentamethylendithiocarbamat (ZPD), Natriumdiethyldithiocarbamat (SEDC), Natriumdimethyldithiocarbamate(SMDC), Natriumdibutyldithiocarbamat (SBC) und Natriumcyclohexylethyldithiocarbamat (SHEC),
wobei in der vulkanisierbaren Zusammensetzung andere Vernetzer als die unter (ii) genannten nur in einer Menge von unter 2,5 Gew.-Teilen, bevorzugt bis zu 1 Gew.-Teil und besonders bevorzugt bis zu 0,75 Gew.Teil, bezogen auf 100 Gew.-Teile des epoxygruppen-haltigen optional ganz oder teilweise hydrierten Nitrilkautschuks (i) enthalten sind und und andere Vernetzungsbeschleuniger als die unter (iii) genannten nur in einer Menge von unter 2,5 Gew.-Teilen, bevorzugt bis zu 1 Gew.-Teil und besonders bevorzugt bis zu 0,75 Gew.Teil, bezogen auf 100 Gew.-Teile des Epoxgruppen-haltigen, optional ganz oder teilweise hydrierten Nitrilkautschuks (i) enthalten sind.

6. Vulkanisierbare Zusammensetzung nach einem der Ansprüche 1 bis 5, **dadurch gekennzeichnet, dass** als Epoxygruppen-haltiger, optional ganz oder teilweise hydrierter Nitrilkautschuk (i) ein solcher eingesetzt wird, bei dem die Epoxygruppen durch nachträgliches Graften oder Pfropfen von Epoxygruppen-haltigen Verbindungen auf den Nitrilkautschuk aufgebracht werden oder aber ein solcher, der Wiederholungseinheiten mindestens eines Nitrils, mindestens eines konjugierten Diens, mindestens eines Epoxygruppen-haltigen Monomers und optional eines oder mehrere weiterer copolymerisierbarer Monomere, jedoch keiner nicht-konjugierter cyclischer Polyene, aufweist.

7. Vulkanisierbare Zusammensetzung nach einem der Ansprüche 1 bis 6, **dadurch gekennzeichnet, dass** der Epoxidgruppen-haltige, ganz oder teilweise hydrierte Nitrilkautschuk (i) Wiederholungseinheiten eines Epoxygruppen-haltigen Monomere der allgemeinen Formel (I) aufweist 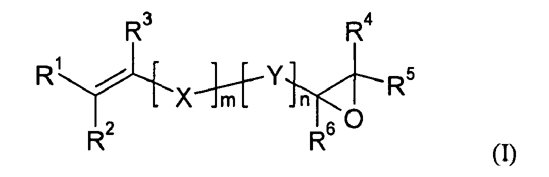 worin,
**m** 0 oder 1 ist und
**X** für O, O(CR₂)ₚ, (CR₂)ₚO, C(=O)O, C(=O)O(CR₂)ₚ, C(=O)NR, (CR₂)ₚ, N(R), N(R)(CR₂)ₚ, P(R), P(R)(CR₂)ₚ, P(=O)(R), P(=O)(R)(CR₂)ₚ, S, S(CR₂)ₚ, S(=O), S(=O)(CR₂)ₚ, S(=O)₂(CR₂)ₚ oder S(=O)₂ steht, wobei R in diesen Resten die gleiche Bedeutungen besitzen kann wie R¹-R⁶
**Y** für Wiederholungseinheiten eines oder mehrerer, ein- oder mehrfach ungesättigter Monomeren steht, umfassend konjugierte oder nicht-konjugierte Diene, Alkine und Vinylverbindungen, oder für ein Strukturelement, welches sich ableitet von Polymeren umfassend Polyether, insbesondere Polyalkylenglykolether und Polyalkylenoxide, Polysiloxane, Polyole, Polycarbonate, Polyurethane, Polyisocyanate, Polysaccharide, Polyester und Polyamide,
**n und p** gleich oder verschieden sind und jeweils im Bereich von 0 bis 10.000 liegen,
**R, R¹, R², R³, R⁴, R⁵ und R⁶** gleich oder verschieden sind und für H, einen linearen oder verzweigten, gesättigten, ein- oder mehrfach ungesättigten Alkylrest, einen gesättigten, ein- oder mehrfach ungesättigten Carbo- oder Heterocyclylrest, Aryl, Heteroaryl, Arylalkyl, Heteroarylalkyl, Alkoxy, Aryloxy, Heteroaryloxy, Amino, Amido, Carbamoyl, Alkylthio, Arylthio, Sulfanyl, Thiocarboxy, Sulfinyl, Sulfono, Sulfino, Sulfeno, Sulfonsäuren, Sulfamoyl, Hydroxyimino, Alkoxycarbonyl, F, Cl, Br, I, Hydroxy, Phosphonato, Phosphinato, Silyl, Silyloxy, Nitril, Borate, Selenate, Carbonyl, Carboxy, Oxycarbonyl, Oxysulfonyl, Oxo, Thioxo, Epoxy, Cyanate, Thiocyanate, Isocyanate, Thioisocyanate oder Isocyanide stehen,

8. Vulkanisierbare Zusammensetzung nach einem der Ansprüche 1 bis 7, **dadurch gekennzeichnet, dass** der Epoxidgruppen-haltige ganz oder teilweise hydrierte Nitrilkautschuk (i) Wiederholungseinheiten eines Epoxygruppen-haltigen Monomers enthält ausgewählt aus der Gruppe 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethylmethacrylat, Glycidylacrylat, (3',4'-Epoxyheptyl)-2-ethylacrylat, (3',4'-Epoxyheptyl)-2-ethylmethacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether und 3-Vinylcyclohexenoxid.

9. Vulkanisierbare Zusammensetzung nach Anspruch 1 oder 2, enthaltend
(i) mindestens einen **Epoxygruppen-haltigen, optional ganz oder teilweise hydrierten Nitrilkautschuk,** der Wiederholungseinheiten abgeleitet von a) Acrylnitril, b) 1,3-Butadien, c) mindestens einem Epoxygruppen-haltigen Monomer ausgewählt aus der Gruppe bestehend aus 2-Ethylglycidylacrylat, 2-Ethylglycidylmethacrylat, 2-(n-Propyl)glycidylacrylat, 2-(n-Propyl)glycidylmethacrylat, 2-(n-Butyl)glycidylacrylat, 2-(n-Butyl)glycidylmethacrylat, Glycidylmethacrylat, Glycidylmethyl-methacrylat, Glycidylacrylat, (3',4'-Epoxyheptyl)-2-ethylacrylat, (3',4'-Epoxyheptyl)-2-ethyl-methacrylat, (6',7'-Epoxyheptyl)acrylat, (6',7'-Epoxyheptyl)methacrylat, Allylglycidylether, Allyl-3,4-epoxy-heptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzylglycidylether, m-Vinylbenzylglycidylether, p-Vinylbenzylglycidylether und 3-Vinylcyclohexenoxid, und d) gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenether, Cryptanden, Tetraalkylammoniumbromiden, insbesondere Tetra-n-butylammoniumbromid, und Triphenylphosphin und/oder eine **Brönstedt-Base** ausgewählt aus der Gruppe bestehend aus Natriumcarbonat, Kaliumcarbonat, Lithiumcarbonat, 1,8-Diazabicyclo[5.4.0]undec-7-en, 1,4-Diazabicyclo[2.2.2]-octan, Pyrrolidin, Pyrazol, Imidazol, Harnstoff, Biuret, Dimethylharnstoff, N,N'-Dimethylpropylenharnstoff oder Natrium-Dodecylbenzylsulfonsäure als Vernetzer und
(iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiuramdisulfid (DPTD), Zinkisopropylxanthogenat (ZIX), Ethylenthioharstoff (ETU), 1,3-Di-o-tolylthioharnstoff (DTTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkpentamethylendithiocarbamat (ZPD), Natriumdiethyldithiocarbamat (SEDC) und Natriumcyclohexylethyldithiocarbamat (SHEC),
wobei in der vulkanisierbaren Zusammensetzung andere Vernetzer als die unter (ii) genannten nur in einer Menge unter 2,5 Gew.-Teilen, bevorzugt nur bis zu 1 Gew. Teil und besonders bevorzugt nur bis zu 0,75 Gew.Teilen, bezogen auf 100 Gew.-Teile des epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen, bevorzugt nur bis zu 1 Gew.Teil und besonders bevorzugt nur bis zu 0,75 Gew.Teilen, bezogen auf 100 Gew.-Teile des Epoxgruppen-haltigen, optional ganz oder teilweise hydrierten Nitrilkautschuks (i) enthalten sind.

10. Vulkanisierbare Zusammensetzung nach Anspruch 1 oder 2, enthaltend
(i) mindestens einen **Epoxygruppen-haltigen, optional ganz oder teilweise hydrierten Nitrilkautschuk,** der Wiederholungseinheiten abgeleitet von a) Acrylnitril, b) 1,3-Butadien, c) Glycidylacrylat und/oder Glycidylmethacrylat und d) gegebenenfalls einem oder mehreren weiteren copolymerisierbaren Monomeren, jedoch keinem nicht-konjugierten cyclischen Polyen enthält,
(ii) mindestens eine **Lewis-Base** ausgewählt aus der Gruppe bestehend aus Kronenether, Cryptanden, Tetraalkylammoniumbromiden, insbesondere Tetra-n-butylammoniumbromid, und Triphenylphosphin und/oder eine **Brönstedt-Base** ausgewählt aus der Gruppe bestehend aus Natriumcarbonat, Kaliumcarbonat, Lithiumcarbonat, 1,8-Diazabicyclo[5.4.0]undec-7-en, 1,4-Diazabicyclo[2.2.2]-octan, Pyrrolidin, Pyrazol, Imidazol, Harnstoff, Biuret, Dimethylharnstoff, N,N'-Dimethylpropylenharnstoff oder Natrium-Dodecylbenzylsulfonsäure als Vernetzer
(iii) mindestens einen **Vernetzungsbeschleuniger** ausgewählt aus der Gruppe bestehend aus Hexamethylendiaminocarbamat, Tetramethylthiuramdisulfid (TMTD), Tetramethylthiurammonosulfid (TMTM), Tetraethylthiuramdisulfid (TETD), Dipentamethylenthiuramdisulfid (DPTD), Zinkisopropylxanthogenat (ZIX), Ethylenthioharstoff (ETU), 1,3-Di-o-tolylthioharnstoff (DTTU), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkpentamethylendithiocarbamat (ZPD), Natriumdiethyldithiocarbamat (SEDC) und Natriumcyclohexylethyldithiocarbamat (SHEC),
wobei in der vulkanisierbaren Zusammensetzung andere Vernetzer als die unter (ii) genannten nur in einer Menge unter 2,5 Gew.-Teilen %, bevorzugt nur bis zu 1 Gew. Teil und besonders bevorzugt nur bis zu 0,75 Gew.Teilen, bezogen auf 100 Gew.-Teile des epoxgruppen-haltigen, optional ganz oder teilweise hydrierten Nitrilkautschuks (i) enthalten sind und andere Vernetzungsbeschleuniger als die unter (iii) genannten nur in einer Menge von unter 2,5 Gew.-Teilen, bevorzugt nur bis zu 1 Gew. Teil und besonders bevorzugt nur bis zu 0,75 Gew.Teilen, bezogen auf 100 Gew.-Teile des Epoxgruppen-haltigen, optional ganz oder teilweise hydrierten Nitrilkautschuks (i) enthalten sind.

11. Verfahren zur Herstellung einer vulkanisierbaren Zusammensetzung nach einem der Ansprüche 1 bis 10 durch Mischen mindestens eines Epoxygruppen-haltigen, ganz oder teilweise hydrierten Nitrilkautschuks (i) mit mindestens einer Lewis- und/oder Brönsted-Base (ii) un mindestens einem Vernetzungsbeschleuniger (iii).

12. Verfahren zur Herstellung von Vulkanisaten auf Basis eines Epoxygruppen-haltigen, optional ganz oder teilweise hydrierten Nitrilkautschuks, **dadurch gekennzeichnet, dass** die vulkanisierbare Zusammensetzung nach einem der Ansprüche 1 bis 10 unter Erhöhung der Temperatur, bevorzugt im Bereich von 20 bis 250°C, besonders bevorzugt im Bereich von 50 bis 230°C vernetzt wird.

13. Vulkanisate basierend auf einem vernetzten Epoxygruppen-haltigen, optional ganz oder teilweise hydrierten Nitrilkautschuk nach einem der Ansprüche 1 bis 10.
